# EUROPÄISCHE PATENTSCHRIFT

(11) **EP 4 048 193 B1**
(45) Veröffentlichungstag und Bekanntmachung des Hinweises auf die Patenterteilung: **29.01.2025**
(21) Anmeldenummer: 20804152.5
(22) Anmeldetag: 20.10.2020
(51) Int. Cl.: A61C 13/20, A61C 13/00, A61C 5/77, B33Y 80/00

(54) **VERFAHREN ZUR HERSTELLUNG EINER KALTGUSSFORM UND KALTGUSSFORM FÜR DIE HERSTELLUNG VON FORMTEILEN, INSBESONDERE ZAHNERSATZ**
METHOD FOR PRODUCING A COLD-CASTING MOULD, AND COLD-CASTING MOULD FOR THE PRODUCTION OF MOULDED PARTS, IN PARTICULAR DENTURES
PROCÉDÉ DE RÉALISATION D'UN MOULE DE COULÉE À FROID ET UN MOULE DE COULÉE À FROID POUR LA RÉALISATION DE PIÈCES MOULÉES, NOTAMMENT D'UNE PROTHÈSE DENTAIRE

(30) Priorität: 21.10.2019 DE 102019128336
(43) Veröffentlichungstag der Anmeldung: 31.08.2022
(73) Patentinhaber: WDT-Wolz-Dental-Technik GmbH, 55566 Bad Sobernheim (DE)
(72) Erfinder: WOLZ, Stefan, 55566 Bad Sobernheim (DE)
(74) Vertreter: Götz, Gudrun Veronika
(86) Internationale Anmeldenummer: PCT/EP2020/079500
(87) Internationale Veröffentlichungsnummer: WO 2021/078740

(56) Entgegenhaltungen:
- CN-A- 106 175 946
- DE-U1- 29 606 662
- GB-A- 193 481
- US-A1- 2005 100 868
- US-A1- 2008 089 966
- US-A1- 2012 139 142
- US-A1- 2017 210 037
- US-A1- 2018 009 032
- US-A1- 2018 280 116

## Beschreibung

Die Erfindung betrifft ein Verfahren zur Herstellung einer Kaltgussform für die Herstellung von Formteilen, insbesondere zahnmedizinischen Formteilen aus einer Anmischmasse, wobei die Kaltgussform mit einer dem Formteil, insbesondere zahnmedizinischen Formteil geometrisch entsprechenden Kavität anhand eines digitalen Datensatzes, basierend auf einem räumlichen Modell des Mundraums eines Patienten und mindestens einer in die Kavität mündenden, ersten Öffnung zur Befüllung mit der Anmischmasse mittels eines additiven Materialaufbauverfahrens, insbesondere eines 3D-Druckverfahrens unter Verwendung eines 3D-Druckers, aus einem Ausgangsmaterial additiv aufgebaut wird. Auch offenbart wird außerdem die Verwendung bzw. die Herstellung einer solchen, additiv aufgebauten Kaltgussform für ein Verfahren zur Herstellung von Formteilen, insbesondere zahnmedizinischen Formteilen aus einer sinterfähigen oder einer lichthärtenden Anmischmasse.

Die Herstellung von Formteilen anhand computergestützter Verfahren (CAD/CAM) ist aus einer Vielzahl technischer Gebiete bekannt. Auch zahnmedizinische Formteile, insbesondere Zahnersatz, wie Kronen und Brücken, aber auch Zahnimplantate und Prothesen oder für die Kieferorthopädie relevante Teile, wie Brackets werden durch computergestützte Verfahren (CAD/CAM) in vielen Zahnarztpraxen und Zahnlabors hergestellt. Hierbei wird zunächst ein digitales, räumliches Modell des Mundraums eines Patienten erstellt. Der benötigte Zahnersatz wird mithilfe einer Software geplant und der erstellte Datensatz beispielsweise an eine Fräsmaschine übermittelt, die den fertigen Zahnersatz aus einem Rohling herausfräst. Die Rohlinge werden üblicherweise nach einem Kaltgussverfahren hergestellt, bei welchem zunächst eine Anmischmasse aus einem für die Dentaltechnik geeigneten Keramikpulver oder Metallpulver hergestellt wird. Als Anmischmasse kann bspw. eine pastöse Masse, ein Schlicker, eine Suspension oder auch eine "trockene" Pulverschüttung verwendet werden. Ein Verfahren zur Herstellung von Zahnersatz aus Dentalmetallpulver ist aus der EP 2 470 113 B1 bekannt. Hierbei wird ein CrCo-Dentalmetallpulver zu einem Schlicker angerührt, kalt in eine Gussform eingefüllt und in dieser getrocknet. Ein dem Schlicker zugesetztes Bindemittel verleiht nach der Trocknung eine ausreichende Formfestigkeit, sodass der getrocknete Schlicker als Grünling aus der Kaltgussform entnommen und anhand des übermittelten, digitalen Datensatzes mittels der Fräsmaschine in die gewünschte Raumform gefräst wird. Durch abschließendes (Dicht)-Sintern erhält der Zahnersatz die erforderliche Härte und Dichte. Erforderliche Materialeigenschaften zur Zulassung als zahnmedizinische Formteile sind anhand nationaler und/oder internationaler Normen fest definiert. Derlei Kaltgussverfahren eignen sich lediglich zur Herstellung von Rohlingen. Die feinen, komplexen Formen des eigentlichen Zahnersatzes werden anschließend durch spanabhebende Bearbeitung aus dem Rohling herausgefräst. Lehren zu Metall- oder Keramikschlickern für die Dentaltechnik sind Stand der Technik und bspw. in den Druckschriften EP1658018 B1, EP1047355 B1, WO 2013007684 A, EP1558170 B1 und EP1885278 B1 zu finden, Informationen zu deren Konditionierung können den Druckschriften DE 10 2005 023 727 B4 und DE19801534 A1 entnommen werden. Auch die Durchführung des abschließenden Dichtsinterns ist hinreichend im Stand der Technik beschrieben, entsprechende Verfahren und Sinteröfen können der EP 2765950 B1, EP 2844412 A1, WO2011020688 A1 entnommen werden.

Dokument CN106175946A1 beschreibt ein Verfahren und eine Vorrichtung zur Herstellung einer Zahnprothese. Das Verfahren umfasst die Schritte: Herstellen eines Zahnprothesenmodells entsprechend der Form der Zähne des Patienten, Bilden einer Spritzgusskavität in derselben Form wie die des Zahnprothesenmodells in einer Gussform, Bilden eines Spritzgusslochs und eines mit der Spritzgusskavität verbundenen Abluftlochs, Einspritzen geschmolzener Rohstoffe in die Spritzgusskavität durch das Spritzgussloch und Entnehmen der geschmolzenen Rohstoffe nach dem Abkühlen und Formen, um eine Zahnprothese zu erhalten.

Bei der Verwendung von Pulverschüttungen als Anmischmasse ist zur Erlangung einer ausreichenden Formfestigkeit, üblicherweise ein zusätzlicher Arbeitsschritt, die Durchführung eines isostatischen Pressens, erforderlich. Hierbei wird die Anmischmasse von allen Seiten gleichmäßig mit hohem Druck beaufschlagt. Entsprechende Verfahren zur Herstellung von keramischem Zahnersatz aus Keramikpulvern, bspw. Zirkonoxid, sind ebenfalls hinreichend aus dem Stand der Technik bekannt. Ein Verfahren, bei dem Zahnteile aus Keramikpulver hergestellt werden ist in der WO 2008/114 142 A1 beschrieben.

Das digitale, räumliche Modell des Mundraums wird auch für die Herstellung von Provisorien aus Kunststoff verwendet. Hierbei wird der für den Zahnersatz erstellte Datensatz an einen 3D-Drucker weitergeleitet, der das Provisorium mittels eines additiven Materialaufbauverfahrens (3D-Druck) schichtweise aus Kunststoff-Ausgangsmaterial aufbaut.

Mittlerweile können im Gebiet der additiven Materialaufbauverfahren neben Kunststoffen aber auch anorganische Stoffe als Ausgangsmaterial dienen. Bekannt sind additive Materialaufbauverfahren wie SLM (selektives Laserschmelzen), Extrusionsverfahren, wie FDM (Fused Deposition Molding) und FFF (Fused Filament Fabrication). Ebenfalls sind additive Materialaufbauverfahren, die die Lichthärteeigenschaften der Ausgangsstoffe nutzen bekannt, wie z. B.: SLA bzw. STL (Stereolithographie), DLP (Digital Light Processing), LCM (Lithography-based Ceramic Manufacturing).

Auch zur Herstellung von Zahnersatz aus Metall oder Keramik, mittels additiver Materialaufbauverfahren gibt es daher bereits erste Versuche. Ein Verfahren, bei dem eine Zahnkrone mittels eines additiven Materialaufbauverfahrens aus Zirkonia hergestellt wird, ist aus der WO2018/065856 A1 bekannt. Allerdings sind 3D-Drucker für Metall- oder Keramikobjekte sehr teuer und/oder das gedruckte Formteil erfüllt nicht die hohen Materialanforderungen, um zur zahnmedizinischen Nutzung zugelassen zu werden. Insbesondere wird für additive Materialaufbauverfahren ein sehr hoher Bindemittelanteil im Ausgangsmaterial (ca. 30%) benötigt, weshalb die geforderte Enddichte bzw. Endhärte nicht oder äußerst aufwendig zu erreichen ist. Eine wirtschaftliche Umsetzung des Druckens von zahnmedizinischen Formteilen aus Keramik oder Metall ist nicht in Sicht.

Eine andere Möglichkeit, bei der die digitalen, räumlichen Daten des Mundraums zur Herstellung komplex geformter und dichtgesinterter Zahnersatzteile mit einem 3D-Drucker genutzt werden sollen, offenbart die WO 2019/210285 A2. Hierzu soll nicht der Zahnersatz, sondern eine sich selbst zerstörende Gussform mittels eines 3D-Druckers gedruckt werden. Als Ausgangsmaterial für den Druckvorgang wird eine Pulvermischung aus zwei Komponenten, einem sinterfähigen Aluminapulver und einem pulverförmigen Bindemittel mit hohem Wärmeausdehnungskoeffizienten (WAK) verwendet. Die gedruckte Gussform wird mit einer sinterfähigen, trockenen Zirkoniapulverschüttung als Anmischmasse befüllt. Anschließend wird die Gussform mit einem aus demselben Material gedruckten Deckel verschlossen, um die Gussform zusammen mit der darin befindlichen Zirkoniapulverschüttung isostatisch bei einem Druck von 400 MPa zu pressen. Ausschlaggebend ist bei diesem Verfahren, dass die Pulverschüttung frei von Bindemitteln ist, um eine gleichmäßige Pressung zu ermöglichen. Die Pulverschüttung wird hierbei gemeinsam mit der Gussform verdichtet und anschießend, ohne die Gussform zu entfernen, gesintert. Beim Sintern dehnen sich die in der Gussform enthaltenen Bindemittel aus, wodurch die Gussform aufplatzt.

Damit sich das fertig gesinterte Formteil von der Gussform löst, muss die Sintertemperatur der Gussform höher sein als die Sintertemperatur der Pulverschüttung. Nachteilig an dem offenbarten Verfahren sind einerseits die hohen Kosten, die mit dem 3D-Druck des keramischen Ausgangsmaterials sowie dem isostatischen Pressen bei extrem hohen Drücken von 400 MPa verbunden sind. Die Verwendung eines keramischen Ausgangsmaterials, mit einer Sintertemperatur höher als die der Pulverschüttung, ist für das beschriebene Verfahren aber maßgeblich. Andererseits sind auch die Einsatzmöglichkeiten des Verfahrens begrenzt. Die verwendete Anmischmasse muss frei von Bindemitteln sein, um eine gleichmäßige Pressung zu erreichen. Darüber hinaus eignen sich verdichtende Pressverfahren, gerade das isostatische Pressen, bei welchem der Druck von allen Seiten gleichmäßig auf das Formteil einwirken soll, nicht für Anmischmassen, deren Feuchtegehalt mehr als 7% beträgt. Flüssigkeiten sind nahezu inkompressibel. Zur Durchführung des isostatischen Pressens ist es erforderlich, die Pulverschüttung vollständig innerhalb der mit dem Deckel verschlossenen Gussform einzuschließen. Aus diesem Grund kann etwaige in der Anmischmasse enthaltene Feuchtigkeit nicht entweichen.

Aufgabe der vorliegenden Erfindung ist es daher, eine additiv aufgebaute, insbesondere 3D-gedruckte Kaltgussform bereitzustellen, die eine gegenüber dem Stand der Technik kostengünstigere und massentauglichere Herstellung von zahnmedizinischen Formteilen mit komplizierten anatomischen Formen, Farbgebungen und lichtbrechenden Oberflächenstrukturen, wie bei Kronen, Brücken, Kieferimplantaten, Abutments, Prothesen usw. ermöglicht. Gleichzeitig sollen die Einsatzmöglichkeiten erweitert werden. Insbesondere wird die Verwendung unterschiedlichster Anmischmassen, aus sinterfähigen und nicht sinterfähigen, metallischen und/oder keramischen Werkstoffen oder aus Kunststoff, entweder in trockener Pulverform oder als Schlicker, Suspension oder pastöse Masse ermöglicht.

Die Aufgabe wird gelöst durch ein Verfahren zur Herstellung einer Kaltgussform gemäß Anspruch 1. Ein Verfahren zur Herstellung einer Kaltgussform der eingangs näher beschriebenen Art kennzeichnet sich dadurch, dass die Kaltgussform mit mindestens einer, in die Kavität mündenden und/oder aus der Kavität führenden, zweiten Öffnung zum Ausleiten von Gasen, insbesondere von Lufteinschlüssen, und/oder Flüssigkeiten, insbesondere Verdünnungsmitteln, additiv aufgebaut wird.

Erfindungsgemäß ist also vorgesehen, zusätzlich zu der ersten Öffnung die zur Befüllung der Kavität mit der Anmischmasse vorgesehen ist, mindestens eine zweite Öffnung auszubilden, die, wie auch die erste Öffnung, fluidleitend in die Kavität mündet bzw. aus dieser hinausführt. Grundsätzlich ist es denkbar, die erste Öffnung und/oder die zweite Öffnung auszubilden, insbesondere zu bohren, nachdem der additive Aufbau der Kaltgussform abgeschlossen ist. Vorteilhaft ist es aber, die erste Öffnung und/oder die zweite Öffnung direkt während des additiven Materialaufbaus auszubilden, sodass ein zusätzlicher Arbeitsschritt vermieden wird. Vergleichbar mit bspw. (Vakuum-)Flaschenabfüllanlagen ist es auch denkbar, die zweite Öffnung (zur Entlüftung) während des additiven Materialaufbaus auszubilden und die erste Öffnung (zur Befüllung) durch, insbesondere konzentrisches, Einführen eines Befüllungskanals in die zweite Öffnung auszubilden. Durch die zweite Öffnung wird ermöglicht, Fluide, d. h. Gase und/oder Flüssigkeiten bereits während der Befüllung der Kaltgussform (vergleichbar mit einer Belüftungsöffnung beim Eingießen mit einem TetraPak^{®}) auszuleiten. Nach der Befüllung, zum Aushärten und/oder Verfestigen der Anmischmasse, bleiben die mindestens eine, erste Öffnung und/oder die mindestens eine zweite Öffnung unverschlossen, wodurch ein Entweichen von Fluiden ermöglicht wird. Einerseits können so beispielsweise durch das Befüllen der Kaltgussform mit der Anmischmasse verursachte Lufteinschlüsse ausgeleitet werden. Andererseits können auch Flüssigkeiten, wie Verdünnungsmittel, die in pastösen, feuchten oder schlickerartigen Anmischmassen oder Suspension enthalten sind aus der Kavität der Kaltgussform ausgeleitet werden, wodurch ein Trocknen der Anmischmasse innerhalb der Kaltgussform ermöglicht wird. Durch die Ausbildung der mindestens einen, zweiten Öffnung kann die nach dem erfindungsgemäßen Verfahren additiv aufgebaute Kaltgussform nicht nur für Anmischmasse mit beliebigem Feuchtegehalt verwendet werden, die mindestens eine, zweite Öffnung erlaubt auch eine Entlüftung bei der Verwendung einer Pulverschüttung, die beispielsweise durch Rütteln unterstützt werden kann.

Nach einer bevorzugten Ausführung der Erfindung wird daher mindestens eine, die Kavität begrenzende Wandung der Kaltgussform vollständig oder bereichsweise mit einer Vielzahl an in die Kavität mündenden und diese Wandung durchsetzenden, zweiten Öffnungen zum Ausleiten von Gasen, insbesondere Lufteinschlüssen, und/oder Flüssigkeiten, insbesondere Verdünnungsmitteln additiv aufgebaut.

Indem eine oder mehrere Wandungen der Kaltgussform mit einer Vielzahl, zueinander benachbarter, zweiter Öffnungen durchsetzt wird, lässt sich eine siebartige Fläche ausbilden, die einerseits den Durchtritt von Flüssigkeiten und Gasen ermöglicht, jedoch Feststoffe zurückhält. Vorzugsweise ist der Durchmesser der jeweiligen zweiten Öffnungen hierbei kleiner, als die Partikelgröße und/oder die Größe sich bildender Partikelagglomerate, der in der Anmischmasse enthaltenen Pulver, wie Metallpulver, Keramik- Glaskeramikpulver oder Kunststoffpulver.

In Weiterbildung dieser Ausführung sind die Vielzahl an zweiten Öffnungen daher auch in der Art von Poren und/oder Kapillaren, die die Wandung durchsetzen ausgebildet, sodass die Wandung vollständig oder bereichsweise poröse und/oder hygroskopische Eigenschaften aufweist.

Eine solche Ausgestaltung hat weiterhin den Vorteil, dass in der Anmischmasse enthaltene Feuchtigkeit von der angrenzenden, porösen und/oder hygroskopischen Wandung aufgenommen oder aufgesogen und vorzugweise aus dem Inneren heraus, in Richtung der die Kaltgussform umgebenden Atmosphäre oder abtransportiert werden. Dieser Effekt kann durch Erhöhung der die Kaltgussform umgebenden Umgebungstemperatur oder andere Maßnahmen zur Senkung der Luftfeuchtigkeit der Umgebung, wodurch eine trockenere Umgebungsluft erzeugt wird, unterstützt werden.

Vorteilhaft ist auch, die Kaltgussform aus unterschiedlichem Ausgangsmaterial mit voneinander abweichenden physikalischen Eigenschaften herzustellen. Bspw. kann die Feuchtigkeitsaufnahmefähigkeit der porösen und/oder hygroskopischen Bereiche durch ein geeignetes Ausgangsmaterial erhöht werden. Andere Bereiche oder Strukturen der Kaltgussform, wie Befüllungskanäle, Ausgleichsvolumen oder Stützstrukturen können durch Auswahl eines anderen Ausgangsmaterials mit anderen Eigenschaften, bspw. Wasserlöslichkeit, Farbe, Transparenz usw. ausgebildet werden.

Um die Befüllung der Kaltgussform, zum Beispiel mittels einer Spritze oder einer Kanüle oder einem ähnlichen Werkzeug zu erleichtern, kann die Kaltgussform mit einem an die mindestens eine erste Öffnung fluidleitend angrenzenden Befüllungskanal additiv aufgebaut werden.

Der Befüllungskanal ist vorzugsweise einstückig mit der Kaltgussform ausgebildet. Durch den Befüllungskanal wird insbesondere eine druckbeaufschlagte Befüllung der Kaltgussform, beispielsweise durch Spritzgießen ermöglicht.

In Weiterbildung ist der Befüllungskanal fluidleitend mit mindestens einem Ausgleichsvolumen zum Vorhalten von Anmischmasse fluidleitend verbunden.

Vorzugsweise wird auch das Ausgleichsvolumen einstückig mit der Kaltgussform additiv aufgebaut. Insbesondere bei Verwendung von Anmischmasse mit höherem Feuchtigkeitsgehalt und/oder bei Lufteinschlüssen, fungiert das Ausgleichsvolumen als eine Art Reservoir und ermöglicht ein Nachlaufen oder Nachrieseln von Anmischmasse um den Volumenverlust, der durch das Entweichen von Gasen und/oder Flüssigkeiten über die mindestens eine zweite Öffnung aus der Kavität bedingt ist, auszugleichen.

Eine schnellere und/oder gleichmäßigere Befüllung der Kavität der Kaltgussform kann nach einer alternativen Erfindungsvariante realisiert werden, indem die Kaltgussform mit zwei oder mehr, jeweils in die Kavität mündenden ersten Öffnungen zur zeitgleichen oder zeitversetzten Befüllung mit Anmischmasse additiv aufgebaut wird.

Indem zwei oder mehr zur Befüllung vorgesehene erste Öffnungen an unterschiedlichen Positionen in die Kavität münden, kann beispielsweise auch eine Befüllung mit unterschiedlichen Anmischmassen an unterschiedliche Positionen der Kavität erfolgen. Sofern die zusätzlichen ersten Öffnungen nicht zur Befüllung verwendet werden, können diese als zweite Öffnungen zum Ausleiten von Fluiden fungieren.

Besonders vorteilhaft wird zum additiven Aufbauen der Kaltgussform ein organisches Material, insbesondere ein organisches Wachs und/oder ein Polymer und/oder ein Kunststoff als Ausgangsmaterial verwendet, sodass die Kaltgussform plastifizierbar und/oder thermisch und/oder thermochemisch zersetzbar ist.

Organische Materialien wie Wachse und/oder Polymere und/oder Kunststoffe sind wesentlich einfacher und somit kostengünstiger in additiven Materialaufbauverfahren wie zum Beispiel beim 3-D Drucken einzusetzen. Die Wärmebeständigkeit von Kunststoffen ist vergleichsweise gering, sodass sich die aus einem organischen Material additiv aufgebaute Kaltgussform plastifizieren oder sogar thermisch und/oder thermochemisch, insbesondere durch Pyrolyse und/oder Verbrennung zersetzen lässt. Vorteilhaft kann für Strukturen und/oder Wandungen der Kaltgussform, die nicht die Kavität begrenzen bzw. unmittelbar an diese anschließen, insbesondere für Stützstrukturen, Befüllungskanäle, Ausgleichsvolumen usw. ein Ausgangsmaterial mit einem niedrigeren Schmelzpunkt, bspw. Wachs verwendet werden, als für die die Kavität begrenzenden Wandungen der Kaltgussform, die dann bspw. aus Polymeren oder Kunststoffen additiv aufgebaut werden. Auf diese Weise lassen sich beim Plastifizieren oder Zersetzen der Kaltgussform, insbesondere wärmebedingt auftretende Spannungen, die zu Beschädigungen des Formteils führen könnten, vermindern oder sogar ganz vermeiden. Das organische Ausgangsmaterial kann geringe Zusätze an anorganischen Materialien enthalten. Beispielsweise ist es üblich, Kunststoffen anorganische Additive beizumischen. Der Anteil an organischen Komponenten liegt aber stets über dem Anteil an anorganischen Komponenten.

Vorzugsweise weist das zum additiven Aufbauen der Kaltgussform verwendete, organische Material einen Schmelzpunkt und/oder eine Zersetzungstemperatur in einem Temperaturbereich von 40°C bis 300°C, vorzugsweise 60°C bis 300°C auf.

Die Schmelztemperatur oder der Schmelztemperaturbereich der Kaltgussform liegt somit unterhalb der Schmelz- und/oder Sintertemperatur der üblicherweise verwendeten Anmischmassen. Vorteilhafterweise liegt auch die Zersetzungstemperatur, also die Temperatur bei der eine thermische und/oder thermochemische Zersetzung der Kaltgussform beginnt, unterhalb der Schmelz- und/oder Sintertemperatur der verwendeten Anmischmasse.

In Weiterbildung ist das zum additiven Aufbauen der Kaltgussform verwendete, organische Material durch Wärmeeinwirkung, insbesondere bei einer Temperatur in einem Temperaturbereich von 35°C bis 300°C, vorzugsweise 50°C bis 300°C plastifizierbar und/oder durch Wärmeeinwirkung, insbesondere bei einer Temperatur in einem Temperaturbereich von 200°C bis 650°C thermisch durch Pyrolyse und/oder thermochemisch durch Verbrennung zersetzbar. Eine Materialgruppe mit besonders niedriger Wärmebeständigkeit stellen bspw. Wachse dar. Durch Verwendung eines wachshaltigen, organischen Materials, kann eine Erweichung bzw. Plastifizierung der Kaltgussform bereits ab einer Temperatur von ca. 35°C erzielt werden.

Die thermische und/oder thermochemische Zersetzung kann vorzugsweise vollständig und/oder bei hohen Temperaturen in einem Sintertemperaturbereich von 1300°C bis 2500°C fortgesetzt werden, sodass eine rückstandslose oder zumindest nahezu rückstandslose Auflösung der Kaltgussform durch Wärmeeinwirkung ermöglicht wird.

Alternativ kann gemäß einer vorteilhaften Ausführung aber auch eine mechanische Zerstörung der Kaltgussform bereits beim additiven Materialaufbauverfahren vorgesehen werden, indem mindestens eine, die Kavität der Kaltgussform begrenzende Wandung mit einer Sollbruchstelle, insbesondere mit einer bereichsweise geringeren Wandstärke, additiv aufgebaut wird.

Das vorgeschlagene Herstellungsverfahren beruht auf räumlichen, digitalen Daten, insbesondere des Mundraums eines Patienten. Die daraus abgeleiteten, geometrischen Formdaten für Formteile, insbesondere für zahnmedizinische Formteile werden direkt im additiven Materialaufbauverfahren bei der geometrischen Ausgestaltung der Kavität der Kaltgussform zugrunde gelegt. Um bspw. in der Zahntechnik einen passgenauen Sitz von zahnmedizinischen Formteilen, insbesondere Kronen, Brücken, Zahnimplantatteilen und/oder Prothesen im Mundraum des Patienten zu garantieren, umfasst der digitale Datensatz zur geometrischen Ausgestaltung der Kavität der Kaltgussform daher vorzugsweise einen sinter- und/oder aushärtebedingten Volumenschrumpf der Anmischmasse. Je nach verwendeter Anmischmasse ist ein entsprechender Volumenschrumpf beim Aushärten bzw. Verfestigen und/oder Sintern der Anmischmasse zu berücksichtigen, die Kavität der Kaltgussform ist mit einer entsprechend angepassten (größeren) Ausgangsgeometrie auszubilden. Für Keramikpulver enthaltende Anmischmassen ist bspw. ein Sinterschrumpf in einem Bereich von 25% bis 50%, für Sol und Nanozirkonoxidpartikel enthaltende Anmischmassen in einem Bereich von 50% bis 95% und für Metallpulver enthaltende Anmischmassen ein Sinterschrumpf in einem Bereich von 8% bis 25% jeweils bezogen auf die Ausgangsgeometrie zu berücksichtigen. Für die Aushärtung der Anmischmasse durch Licht und/oder Trocknung ist ein Volumenschrumpf von ca. 2% bis 20% bezogen auf die Ausgangsgeometrie zu berücksichtigen. Auch für die Kaltgussform selbst kann für die Herstellung des Formteils ein Volumenschrumpf in einem Bereich von 1% bis 10%, bezogen auf die Ausgangsgeometrie berücksichtigt werden. Die nach dem erfindungsgemäßen Verfahren hergestellte Kaltgussform ermöglicht eine kostengünstige Herstellung von Formteilen, insbesondere zahnmedizinischen Formteilen aus unterschiedlichsten Anmischmassen.

Die eingangs gestellte Erfindungsaufgabe wird daher auch durch eine Kaltgussform gemäß Anspruch 7 gelöst.

Die erfindungsgemäße Kaltgussform weist mindestens eine, in die Kavität mündende erste Öffnung zur Befüllung mit der Anmischmasse auf und kennzeichnet sich durch mindestens eine, in die Kavität mündende, zweite Öffnung zum Ausleiten von Gasen, insbesondere von Lufteinschlüssen, und/oder Flüssigkeiten, insbesondere Verdünnungsmitteln.

In Ausgestaltung weist die Kaltgussform ein organisches Material, insbesondere ein organisches Polymer oder einen Kunststoff mit einem Schmelzpunkt und/oder einer Zersetzungstemperatur in einem Temperaturbereich von 40°C bis 300°C, insbesondere von 60°C bis 300°C auf, sodass die Kaltgussform, insbesondere bei einer Temperatur in einem Temperaturbereich von 35°C bis 300°C, insbesondere von 50°C bis 300°C plastifizierbar und/oder, insbesondere bei einer Temperatur in einem Temperaturbereich von 200°C bis 650°C thermisch und/oder thermochemisch zersetzbar ist.

Bei zahnmedizinischen Formteilen, wie Kronen, Brücken, Zahnimplantatteilen und/oder Prothesen sind oftmals filigrane, dünnwandige Strukturen erforderlich. Gerade zur Herstellung von zahnmedizinischen Formteilen aus Keramik oder Metall sind hohe Sintertemperaturen erforderlich. Um eine Beschädigung des Formteils durch die thermische Ausdehnung der Kaltgussform zu vermeiden, beträgt die lineare, thermische Ausdehnung der Kaltgussform vorteilhaft höchstens 10%, bevorzugt höchstens 3% und besonders bevorzugt höchstens 0,8% bezogen auf ihre Ausgangsgeometrie, wobei die maximale, thermische Ausdehnung der Kaltgussform bei einer Temperatur kleiner oder gleich 240°C, bevorzugt kleiner oder gleich 200°C, weiter bevorzugt kleiner oder gleich 150°C und besonders bevorzugt, kleiner oder gleich 100°C erreicht ist. Vorzugsweise kann der Wärmeausdehungskoeffizient (WAK-Wert) der Anmischmasse unter Berücksichtigung der jeweiligen WAK-Werte des verwendeten Metall-, Keramik- oder Glaskeramikpulvers, durch die Anteile an Polyelektrolyten und Bindemittel (Polymeren) and den WAK-Wert der Kaltgussform angepasst werden, sodass Kaltgussform und Anmischmasse einer ähnlichen oder identischen Wärmeausdehnung unterliegen. Zusätzlich oder alternativ kann die mechanische Stabilität der Anmischmasse (im Grünlingszustand) durch Erhöhung des Bindemittelanteils erhöht werden.

Um die für zahnmedizinische Formteile erforderliche Maßhaltigkeit der Kaltgussform, auch bei Druckbefüllungsverfahren, zu erreichen, weist die Kaltgussform eine Shore-Härte nach Shore-A von mindestens 15 und/oder Shore-D von mindestens 10 und einen Elastizitätsmodul von mindestens 5 MPa auf. Die, die Kavität der Kaltgussform begrenzenden Wandungen weisen vorzugsweise jeweils eine Wandstärke von mindestens 0,01 mm auf. Die Shore-Härte ist ein Werkstoffkennwert für Elastomere und Kunststoffe und ist in den Normen DIN EN ISO 868, DIN ISO 7619-1 und ASTM D2240-00 festgelegt. Das Elastizitätsmodul, auch als Zugmodul oder E-Modul bezeichnet, wird für Kunststoffe insbesondere nach DIN EN ISO 527-1 :2019-12 bestimmt.

Ein beispielhafter Prototyp einer erfindungsgemäßen Kaltgussform, geeignet zur Herstellung von zahnmedizinischen Formteilen, wurde nach einem Stereolithographie 3D-Druckverfahren mit folgenden PHYSIKALISCHEN EIGENSCHAFTEN hergestellt:

| ASTM-Methode | Eigenschaftsbeschreibung | Metrisch | Imperial |
|---|---|---|---|
| D638M | Zugmodul | 2100 MPa | 305,000 psi |
| D638M | Bruchfestigkeit | 44.9 MPa | 6,500 psi |
| D638M | Bruchdehnung | 6.1% | 6.1% |
| D790M | Biegefestigkeit | 74.3 MPa | 10,770 psi |
| D790M | Biegemodul | 2200 MPa | 329,000 psi |
| D224 | Härte (Shore D) | 85 | 85 |
| D256A | Izod-Schlagzähigkeit | 0.23 J/cm | 0.46 ft lb/in |
| D570-98 | Wasseraufnahme | 0.7% | 0.7% |
| D648 | HDT @ 0.46 MPa (66 psi) | 59° C | 138°F |
| D648 | HDT @ 1.82 MPa (264 psi) | 50° C | 122°F |

Durch Verwendung eines Ausgangsmaterials zum additiven Aufbau der Kaltgussform, welches eine oder mehrere, die Kavität der Kaltgussform begrenzende Wandungen transparent und/oder UV-strahlungsdurchlässig ausbildet, ist eine optische Überwachung der Befüllung der Kaltgussform möglich. Beispielsweise kann die Anmischmasse oder können unterschiedliche Anmischmassen mit optischen Markern, insbesondere mit Lebensmittelfarbe, markiert werden. Die Befüllung der Kaltgussform lässt sich dann mit einer Kamera automatisch überwachen.

Darüber hinaus lassen sich die Einsatzmöglichkeiten der Kaltgussform auch auf lichthärtende Anmischmassen ausweiten, die in einem entsprechend angepassten Verfahren zur Herstellung von Formteilen, insbesondere zahnmedizinischen Formteilen im Inneren der Kaltgussform lichtgehärtet werden.

Die eingangs gestellte Erfindungsaufgabe wird folglich auch durch ein Verfahren zur Herstellung von Formteilen, insbesondere zahnmedizinischen Formteilen aus einer sinterfähigen Anmischmasse unter Verwendung einer erfindungsgemäßen Kaltgussform sowie durch ein Verfahren zur Herstellung von Formteilen, insbesondere zahnmedizinischen Formteilen aus einer lichthärtenden Anmischmasse unter Verwendung einer erfindungsgemäßen Kaltgussform nach einer der vorhergehenden Ausführungen, gelöst.

Ein erfindungsgemäßes Verfahren zur Herstellung von Formteilen, insbesondere zahnmedizinischen Formteilen, insbesondere Kronen, Brücken, Zahnimplantatteilen, Prothesen usw. aus einer sinterfähigen Anmischmasse, wie zahnmedizinischen Keramik- oder Glaskeramikpulvern oder -schlickern, zahnmedizinischen Metallpulvern oder -schlickern usw., unter Verwendung der erfindungsgemäßen Kaltgussform weist die folgenden Verfahrensschritte auf:
- Bereitstellen und/oder Herstellen der Kaltgussform mit einer Kavität und mindestens einer in die Kavität mündenden ersten Öffnung sowie mindestens einer in die Kavität mündenden zweiten Öffnung,
- Befüllen der Kavität der Kaltgussform über die mindestens eine, erste Öffnung mit der sinterfähigen Anmischmasse, und
- Aushärten und/oder Verfestigen der sinterfähigen Anmischmasse in der Kavität der Kaltgussform.

Sowohl beim Befüllen als auch beim Aushärten und/oder Verfestigen der Anmischmasse werden in der Anmischmasse enthaltene und/oder eingeschlossene Gase und/oder Flüssigkeiten über die mindestens eine zweite Öffnung aus der Kavität ausgeleitet. Optional und im Anschluss an das Befüllen, können in der Anmischmasse enthaltene und/oder eingeschlossene Gase und/oder Flüssigkeiten auch über die mindestens eine, erste Öffnung, die während des gesamten Verfahrensablaufs unverschlossen bleibt, entweichen.

Bereits während des Aushärtens und/oder Verfestigens der Anmischmasse, oder wahlweise auch erst nachdem die Anmischmasse vollständig, insbesondere auf Grünlingshärte, ausgehärtet ist, wird eine
- thermische und/oder thermochemische Zersetzung der Kaltgussform, insbesondere bei einer Temperatur in einem Temperaturbereich von 200°C bis 650°C, eingeleitet. Abschließend erfolgt ein
- Sintern der Anmischmasse auf Endhärte, insbesondere bei einer Temperatur in einem Temperaturbereich von 900°C bis 2500°C, bis ein verwendungsfertiges Formteil, insbesondere zahnmedizinisches Formteil, wie ein Zahnersatz erhalten wird. Optional kann während des Sinterns die thermische und/oder thermochemische Zersetzung der Kaltgussform fortgeführt bzw. beendet werden.

Veröffentlicht wird auch ein Herstellungsverfahren unter Verwendung einer Kaltgussform mit mindestens zwei, mit der Kavität fluidleitend verbundenen Öffnungen durchgeführt, wobei die Kavität der Kaltgussform über eine, die erste Öffnung, befüllt wird und zumindest über eine andere, die zweite Öffnung, in der Anmischmasse enthaltene Fluide, wie beispielsweise Verdünnungsmittel oder von der Anmischmasse eingeschlossene Fluide, wie beispielsweise Lufteinschlüsse aus dieser bzw. aus der Kavität ausgeleitet werden. Durch die mindestens zwei Öffnungen wird im Verfahren ein Aushärten und/oder Verfestigen auch von bindemittelhaltigen und/oder feuchten bzw. pastösen Anmischmassen, wie Schlickern oder Suspensionen ermöglicht.

Vorzugsweise liegt die Anmischmasse daher gemäß einer Fortbildung des Verfahrens als Schlicker und/oder pastöse Masse vor und enthält ein Verdünnungsmittel, insbesondere Wasser, wobei die Anmischmasse in der Kavität der Kaltgussform durch Trocknung aushärtet und ein Flüssigkeitsanteil und/oder Feuchtigkeitsgehalt der Anmischmasse mittels der mindestens einen oder der Vielzahl an zweiten Öffnungen aus der Kaltgussform ausgeleitet, insbesondere der Anmischmasse entzogen wird.

In vorteilhafter Verfahrensgestaltung umfasst die Anmischmasse ein Metallpulver, insbesondere ein CrCo-Pulver oder ein Keramikpulver, insbesondere ein Zirkonoxidpulver und/oder ein Aluminiumoxidpulver oder ein Glaskeramikpulver, insbesondere ein Lithiumdisilikatpulver und ein Bindemittel, wobei die Anmischmasse in Weiterbildung dieser Verfahrensgestaltung in der Kavität der Kaltgussform auf Grünlingshärte aushärtet.

Bindemittelhaltige Anmischmassen können allein durch Trocknung, ohne Druckbeaufschlagung, in der Kaltgussform bis zur Grünlingshärte ausgehärtet werden. Durch Verwendung eines Bindemittels kann also auf das aus dem Stand der Technik bekannte, kostenintensive isostatische Pressen verzichtet werden. Gegenüber dem ebenfalls im Stand der Technik beschriebenen Verfahren ist es dann aber erforderlich, das Aushärten der Anmischmasse bei geöffneter Kaltgussform (ohne "Deckel" durchzuführen, wobei Fluide über die mindestens eine, zweite Öffnung und gegebenenfalls zusätzlich auch über die mindestens eine, erste Öffnung aus der Kavität der Kaltgussform ausgeleitet werden.

Bindemittel sind in vielfacher Ausführung aus dem Stand der Technik bekannt und bestehen zum Großteil aus organischen Stoffen, wie Harzen, Tensiden, Polyelektrolyten, Polymeren und/oder Wachsen, die zu einem vergleichsweise niedrigen Schmelzpunkt führen.

Um ein schonendes Ablösen der Kaltgussform von der Anmischmasse zu realisieren, bevor eine Entbinderung stattfindet bzw. bevor das Bindemittel zu schmelzen beginnt, liegt nach einer Verfahrensvariante die Temperaturbeständigkeit und/oder Wärmeformbeständigkeit der Kaltgussform, insbesondere der Schmelzpunkt und/oder die Zersetzungstemperatur der Kaltgussform unterhalb des Schmelzpunkts des Bindemittels und/oder unterhalb der Sintertemperatur des Metallpulvers oder des Keramikpulvers.

Für das Verfahren ist die Verwendung einer thermisch und/oder thermochemisch zersetzbaren Kaltgussform vorgesehen. Vorzugsweise wird die thermische und/oder thermochemische Zersetzung der Kaltgussform in einem Sinterofen durchgeführt, wobei die Kaltgussform geöffnet und gemeinsam mit der darin befindlichen Anmischmasse in dem Sinterofen platziert wird. Bereits bei einer Temperatur in einem Bereich von 200°C bis 650°C kann die Zersetzung der Kaltgussform eingeleitet oder vollständig durchgeführt werden. Die jeweiligen Sintertemperaturen der Keramikpulver oder Metallpulver die in den sinterfähigen Anmischmassen enthalten sind, liegen in einem Bereich zwischen 1200 °C bis 2500 °C, sodass die Kaltgussform bis zum Erhalt des fertigen, d. h. auf Endhärte dichtgesinterten Formteils, insbesondere zahnmedizinischen Formteils vollständig oder nahezu vollständig thermisch und/oder thermochemisch zersetzt ist. Auf diese Weise kann die Kaltgussform ohne zusätzliche Arbeitsschritte vor oder während des Sintervorgangs schonend und ohne Beschädigung des Formteils entfernt werden.

Ein optionaler Verfahrensschritt sieht vor, die Anmischmasse vor dem eigentlichen Sintern, insbesondere bei einer Temperatur in einem Temperaturbereich von 650°C bis 1300°C vorzusintern, um die Bindemittelanteile zu entfernen, bevor das Formteil auf Endhärte verdichtet wird.

Nach einer Verfahrensvariante kann die Zersetzung der Kaltgussform unter sauerstofffreien Bedingungen pyrolytisch durchgeführt werden. Insbesondere wird die Kaltgussform hierzu gemeinsam mit der darin enthaltenen Anmischmasse in einem Sinterofen platziert, der ein Sintern unter Vakuum und/oder Schutzatmosphäre ermöglicht. Diese Verfahrensvariante eignet sich besonders zur Herstellung von metallischen, zahnmedizinischen Formteilen, beispielsweise aus einer CrCo-Legierung, um Beschädigungen des Formteils durch Oxidation zu vermeiden. Insbesondere zum Erhalt von keramischen, zahnmedizinischen Vorteilen ist nach einer anderen Verfahrensvariante aber auch eine Zersetzung der Kaltgussform unter Sauerstoffzufuhr durch Verbrennung möglich.

Ein Verfahren zur Herstellung von Formteilen, insbesondere zahnmedizinischen Formteilen aus einer lichthärtenden Anmischmasse unter Verwendung einer erfindungsgemäßen Kaltgussform, umfasst die nachfolgenden Schritte:
- Bereitstellen und/oder Herstellen der Kaltgussform mit einer Kavität und mindestens einer, in die Kavität mündenden ersten Öffnung sowie mindestens einer, in die Kavität mündenden zweiten Öffnung,
- Befüllen der Kavität der Kaltgussform über die mindestens eine erste Öffnung mit der lichthärtenden Anmischmasse,
- Aushärten und/oder Verfestigen der lichthärtenden Anmischmasse in der Kavität der Kaltgussform,
wobei in der Anmischmasse enthaltene und/oder eingeschlossene Gase und/oder Flüssigkeiten über die mindestens eine zweite Öffnung aus der Kavität ausgeleitet werden. Auch zur Herstellung von Formteilen, insbesondere zahnmedizinischen Formteilen aus lichthärtenden Anmischmassen ist vorgesehen, dass darin enthaltene Fluide während des Befüllens und/oder des Aushärtens bzw. Verfestigens über die mindestens eine zweite Öffnung entweichen können. Gerade bei der Verwendung von Mehrkomponentenmaterialien, die während der Befüllung miteinander gemischt werden müssen, kommt es oftmals zu unerwünschten Lufteinschlüssen. Noch während der Befüllung mit der Anmischmasse können solche Lufteinschlüsse über die mindestens eine zweite Öffnung der Kaltgussform entweichen.

Wahlweise kann auf eine thermische und/oder thermochemische Zersetzung der Kaltgussform verzichtet werden. Ein Trennen bzw. Ablösen der Kaltgussform von der Anmischmasse entlang einer oder mehrerer Sollbruchstellen der Kaltgussform vorgenommen wird, um ein insbesondere verwendungsfertiges Formteil, insbesondere zahnmedizinisches Formteil, wie einen Zahnersatz zu erhalten. Die Sollbruchstellen sind vorzugsweise bereits bei der Herstellung der Kaltgussform ausgebildet worden, insbesondere kann es sich um Wandbereiche mit einer gegenüber den übrigen Wandbereichen geringeren Wandstärke handeln. Insbesondere durch das Einblasen von Pressluft oder durch Verwendung eines Exzenter-Werkzeugs lässt sich die Kaltgussform, nach Aushärten und/oder Verfestigen der Anmischmasse, entlang der Sollbruchstellen "aufreißen" und so vom Formteil lösen.

Nach vorteilhafter Verfahrensgestaltung umfasst die Anmischmasse ein organisches Material, insbesondere einen Kunststoff oder ein kunststoffbasiertes Kompositmaterial, insbesondere ein kunststoffbasiertes Hybridkompositmaterial oder Nanohybridkompositmaterial. Derartige Komposite werden in der Zahntechnik bislang zumeist für Füllungen oder Provisorien eingesetzt. Gerade mit Nanohybridkompositmaterialien, mit einem hohen Füllstoffgehalt an Fasern oder Partikeln, mit einer Partikelgröße im Nanometerbereich, lassen sich aber grundsätzlich auch die für zahnmedizinische Formteile, wie Zahnersatz, erforderlichen Werkstoffeigenschaften in Bezug auf Härte und Dichtigkeit erzielen.

Bei einer vorteilhaften Variante des Verfahrens härtet die Anmischmasse in der Kavität der Kaltgussform durch eine chemische Reaktion, bspw. mittels eines Zweikomponenten-Bindemittels aus. Die chemische Reaktion kann durch Wärmeeinwirkung und/oder Feuchtigkeitsentzug gestartet werden. Besonders bevorzugt wird die chemische Reaktion durch Lichteinwirkung ausgelöst, wobei die die Kavität der Kaltgussform begrenzenden Wandungen transparent und/oder UV-strahlungsdurchlässig sind und die Kaltgussform mit einer Lichtquelle, insbesondere einer UV-Lampe bestrahlt wird.

Vorzugsweise wird die Anmischmasse in der Kavität der Kaltgussform auf die gewünschte Endhärte, also die Härte des fertigen Formteils ausgehärtet, bevor die Kaltgussform abgelöst bzw. entfernt wird.

Die nachfolgenden Beschreibungsabsätze enthalten vorteilhafte Verfahrensvarianten, die sowohl für die Herstellung von Formteilen aus sinterfähigen Anmischmassen, wie auch für die Herstellung von Formteilen aus chemisch härtenden, insbesondere lichthärtenden Anmischmassen anwendbar sind. So kann beispielsweise die Kaltgussform, insbesondere können die die Kavität begrenzenden Wandungen der Kaltgussform, vor der Befüllung mit der Anmischmasse mit einem Beschichtungsmittel beschichtet wird, um eine reib- und/oder stoffschlüssige Verbindung zwischen der Kaltgussform und der Anmischmasse zu vermeiden.

Denkbar ist, die Kaltgussform zeitnah oder unmittelbar vor der Befüllung mit der Anmischmasse in ein Becken mit einer organischen, öligen Flüssigkeit wie beispielsweise Petroleum zu tauchen oder alternativ mit einer organischen, öligen Flüssigkeit wie beispielsweise Petroleum zu spülen. Auf diese Weise lässt sich einfach und unkompliziert eine hitzebeständige Schutzschicht zwischen den die Kavität begrenzenden Wandungen der Kaltgussform und der Anmischmasse ausbilden, ohne die erste und/oder die zweite Öffnung zu verschließen.

Vorzugsweise wird die Kavität der Kaltgussform unter Druckeinwirkung befüllt, wobei ein in der Kavität vorliegender Innendruck geringer ist als ein Befüllungsdruck, mit dem die Anmischmasse der Kavität zugeführt wird.

In der praktischen Umsetzung sind hierzu zwei grundsätzliche Varianten denkbar. Bei einer so bezeichneten Vakuumbefüllung (in ähnlicher Weise z. B. bei Abfüllanlagen für Flaschen umgesetzt) kann innerhalb der Kavität ein Unterdruck gegenüber der Umgebung bzw. ein Vakuum (0,1 mbar bis 0,5 mbar) erzeugt werden, wodurch die Anmischmasse in die Kavität "gesaugt" wird. Nach der Befüllung wird das Vakuum bzw. der Unterdruck aufgelöst, sodass Flüssigkeiten und/oder Gase aus der mindestens einen, zweiten Öffnung und/oder der mindestens einen, ersten Öffnung austreten können. Bei dieser ersten Variante entspricht der Befüllungsdruck dann dem Umgebungsdruck. Bei der zweiten Variante kann die Anmischmasse, beispielsweise mittels einer Pumpe einem Schneckenförderer oder einer einfachen Spritze unter Druckbeaufschlagung, mit Überdruck in einem Bereich bspw. zwischen 1,5 mbar bis zu 10 bar in die Kavität eingespritzt werden, wobei Flüssigkeiten und Gase bereits bei der Befüllung aus der mindestens einen, zweiten Öffnung austreten können. Ein bekanntes Druckbefüllungsverfahren ist zum Beispiel das Spritzgussverfahren.

Nach der Befüllung ist es vorteilhaft, wenn die Anmischmasse in der Kavität der Kaltgussform unter Wärmeeinwirkung, aushärtet, wobei die mit der Anmischmasse befüllte und geöffnete Kaltgussform in einem Trockenschrank bzw. Klimaschrank oder einem Sinterofen platziert wird und eine Temperatur in einem Temperaturbereich von 35°C bis 120°C, vorzugsweise von 50°C bis 120° C eingestellt wird. Bedarfsweise kann auch die Luftfeuchtigkeit auf einen gewünschten Wert eingestellt werden. Für eine schonende, gleichmäßige und gleichzeitig schnelle Trocknung hat sich hat sich eine Luftfeuchtigkeit in einem Bereich von 1% bis höchstens 50% als vorteilhaft herausgestellt.

Durch die Wärmeeinwirkung und bedarfsweise reduzierte Luftfeuchtigkeit lässt sich das Aushärten und/oder Verfestigen der Anmischmasse, zum Beispiel im Falle eines Trocknungsprozesses beschleunigen. Insbesondere wird die in der Umgebung, also im Trockenschrank bzw. Klimaschrank oder im Sinterofen vorliegende Atmosphäre bzw. Umgebungsluft getrocknet, wodurch in der Anmischmasse enthaltene Feuchtigkeit und/oder Flüssigkeit schneller aus der Kavität in die Umgebung abtransportiert werden. Gerade bei der Ausgestaltung von Wandungen der Kaltgussform mit einer porösen und/oder hygroskopischen Fläche, die von einer Vielzahl zweiter Öffnungen in der Art von Poren und/oder Kapillaren durchsetzt ist, kann dieser Effekt erheblichen Einfluss auf die Trocknungszeiten haben

Nach einer Verfahrensoption wird die Kaltgussform, nach dem Befüllen mit der Anmischmasse und vorzugsweise auch nach deren Aushärtung plastifiziert, um ein Ablösen der die Kavität begrenzenden Wandungen von der darin befindlichen Anmischmasse zu erleichtern, wobei die mit der Anmischmasse befüllte Kaltgussform in einem Trockenschrank bzw. Klimaschrank oder einem Sinterofen platziert wird und eine Temperatur in einem Temperaturbereich von 35°C bis 300°C, vorzugsweise von 45°C bis 180°C eingestellt wird. Hierbei können sich die Materialeigenschaften von organischen Materialien bzw. Kunststoffen zunutze gemacht werden. Bevor der Schmelzpunkt der Kaltgussform erreicht wird beginnt sich das organische Material, insbesondere der Kunststoff zu erweichen, wodurch die Kaltgussform plastifizierbar bzw. plastisch verformbar ist. Durch gezieltes Einblasen von Pressluft lässt sich die weiche, verformbare Kaltgussform von der vorzugsweise ausgehärteten Anmischmasse lösen.

Eine besonders schnelle und gleichmäßige Befüllung kann beispielsweise nach einer Ausführungsvariante des Verfahrens erfolgen, indem die Kavität der Kaltgussform über mehrere, erste Öffnungen mit der Anmischmasse befüllt wird.

So können beispielsweise Anmischmassen, die aus zwei oder mehr Komponenten bestehen über entsprechend zwei oder mehr erste Öffnungen in die Kavität der Kaltgussform gefüllt werden, um beispielsweise ein vorzeitiges (lichtbedingtes) Aushärten und/oder Verfestigen bei der Befüllung zu verhindern.

In Weiterbildung dieser Ausführungsvariante wird die Kavität der Kaltgussform über die mehreren ersten Öffnungen mit jeweiligen, Zusatzstoffe zur Einfärbung und/oder zur Erzeugung von Opazität enthaltenden Anmischmassen zur Herstellung eines Formteils, insbesondere eines zahnmedizinischen Formteils mit Bereichen voneinander abweichender Farbgebungen und/oder Opazität befüllt.

Auf diese Weise kann das natürliche Erscheinungsbild eines Zahns nachempfunden werden. Die unterschiedlichen Anmischmassen können hierzu insbesondere verschiedene Zusätze die beim fertigen Formteil zu einer Farbgebung gemäß des Standard Farbrings der Firma Vita, Bad Säckingen, A1 bis A4, B1 bis B4, C1 bis C4 und D1 bis D4 führen. Eine Vielzahl entsprechender Zusatzstoffe ist aus dem Stand der Technik bekannt. Beispiele für geeignete färbende Elemente sind Fe, Mn, Cr, Ni, Co, Pr, Ce, Eu, Gd, Nd, Yb, Tb, Er und Bi.

Schließlich wird nach einer vorteilhaften Verfahrensvariante die Kaltgussform nach einer der Verfahrensvarianten des eingangs beschriebenen Herstellungsverfahrens für eine Kaltgussform hergestellt.

Weitere Einzelheiten, Merkmale, Merkmals(unter) -kombinationen, Vorteile und Wirkungen auf der Basis der Erfindung ergeben sich aus der nachfolgenden Beschreibung bevorzugter Ausführungsbeispiele der Erfindung und den Zeichnungen. Diese zeigen in
- Fig. 1: eine schematisch perspektivische Darstellung eines ersten Ausführungsbeispiels einer erfindungsgemäßen Kaltgussform mit einem Befüllungskanal und einem Ausgleichsvolumen,
- Fig. 2: eine Schnittdarstellung der Kaltgussform aus Figur 1,
- Fig. 3: eine schematisch perspektivische Darstellung eines zweiten Ausführungsbeispiels einer erfindungsgemäßen Kaltgussform mit einem Befüllungskanal,
- Fig. 4: eine Schnittdarstellung eines dritten Ausführungsbeispiels einer erfindungsgemäßen Kaltgussform mit insgesamt fünf Befüllungskanälen,
- Fig. 5: eine schematisch perspektivische Darstellung eines fünften Ausführungsbeispiels einer erfindungsgemäßen Kaltgussform mit fünf Befüllungskanälen und einem Mischmittel,
- Fig. 6: eine Schnittdarstellung der Kaltgussform aus Figur 5 mit angeschlossenem Befüllungsmittel,
- Fig. 7: eine schematische Seitenansicht eines vierten Ausführungsbeispiels einer erfindungsgemäßen Kaltgussform mit Wandverstärkungen und Sollbruchstellen,
- Fig. 8: eine schematisch perspektivische Darstellung eines Formteils, welches mit einer erfindungsgemäßen Kaltgussform hergestellt wurde,
- Fig. 9: eine Schnittdarstellung der Kaltgussform aus Figur 4, die mit unterschiedlichen Anmischmassen befüllt wird,
- Fig. 10: eine schematische Darstellung der mit unterschiedlichen Anmischmassen befüllten Kavität der Kaltgussform aus Figur 9,
- Fig. 11: eine Schnittdarstellung der mit unterschiedlichen Anmischmassen befüllten Kavität der Kaltgussform aus Figur 9,
- Fig. 12: ein Flussdiagramm eines beispielhaften Ablaufs des Verfahrens zur Herstellung eines Formteils, insbesondere zahnmedizinischen Formteils,
- Fig. 13: eine schematische Schnittdarstellung der Kaltgussform aus den Figuren 1 und 2, die elektrophoretisch mit Anmischmasse befüllt wird,
- Fig. 14: eine schematische Schnittdarstellung der Kaltgussform aus den Figuren 1 und 2, die unter Druckeinwirkung mit Anmischmasse befüllt wird und
- Fig. 15: eine schematische Darstellung einer Kaltgussform deren Kavität der Form eines Zahnersatzes entspricht.

Die Figuren sind lediglich beispielhafter Natur und dienen nur dem Verständnis der Erfindung. Die gleichen Elemente sind mit denselben Bezugszeichen versehen und werden daher in der Regel auch nur einmal beschrieben.

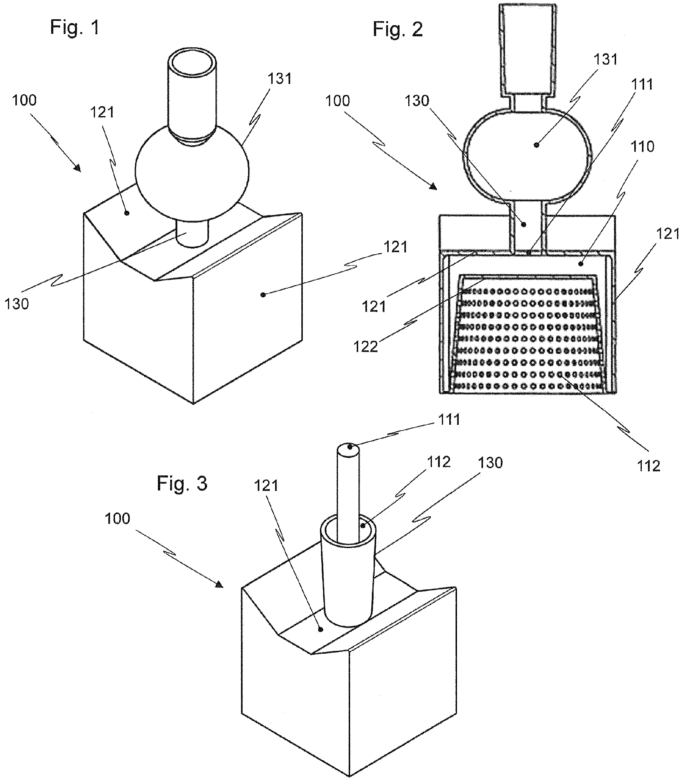

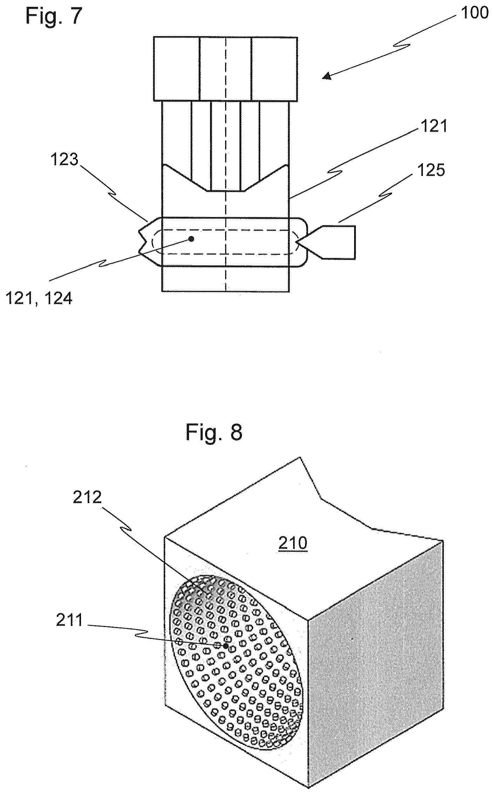

Die Figuren 1 und 2 zeigen jeweils ein erstes Ausführungsbeispiel einer erfindungsgemäßen Kaltgussform 100, in einer schematisch perspektivischen Darstellung bzw. in einer Schnittdarstellung. Die Kaltgussform 100 ist hier beispielhaft in der Form eines Prüfkörpers ausgeführt, dessen Kavität 110 für zahnmedizinische Formteile 210 typische geometrische Eigenschaften aufweist, die zu Wandstärken des Formteils 210 in einem Bereich von 0,30 mm bis 10 mm führen. Die Kavität 110 der Kaltgussform 100 wird durch die außenliegenden Wandungen 121 sowie die innenliegenden Wandungen 122 der Kaltgussform 100 begrenzt, sodass das fertige Formteil 210, z. B. eine Krone, einen innenliegenden Hohlraum 211 (s. Figur 8) aufweist, der beispielsweise der Form eines Abutments entspricht, wodurch sich die Krone auf das Abutment aufsetzen lässt. Die innenliegenden Wandungen 122 bilden hierzu eine zylindrische oder kegelstumpfartige Form aus. In die Kavität 110 mündet eine erste Öffnung 111, die eine der außenliegenden und bezüglich des zahnmedizinischen Formteils 210 okklusale Wandung 121 durchsetzt. Über die erste Öffnung 111 wird die Kavität 110 mit der Anmischmasse 200 befüllt. Die innenliegenden Wandungen 122 sind mit einer Vielzahl zweiter Öffnungen 112 durchsetzt, die beispielsweise das Entweichen von in der Anmischmasse 200 enthaltenen Fluiden 205, 207 und/oder Lufteinschlüssen 208 bereits während der Befüllung ermöglichen. Nach der Befüllung können Fluide 205, 207, 208 optional zusätzlich über die erste Öffnung 111 austreten. Die Vielzahl zweiter Öffnungen 112 kann, wie hier beispielhaft gezeigt eine innere Mantelfläche der Kavität 110 siebartig durchsetzen. Alternativ könnte die Vielzahl zweiter Öffnungen 112 in der Art von Poren und/oder Kapillaren ausgeführt sein und eine poröse und/oder hygroskopische Fläche bilden.

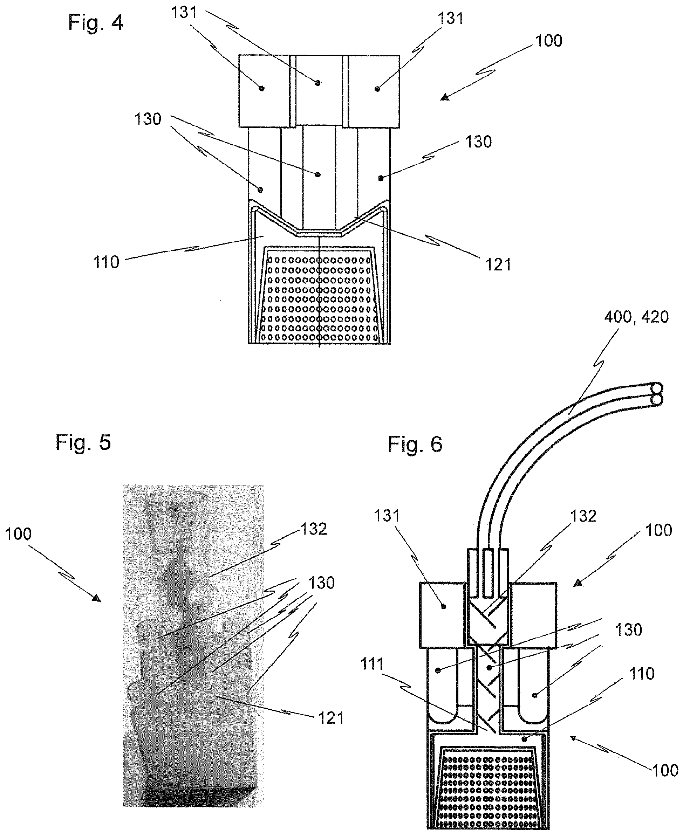

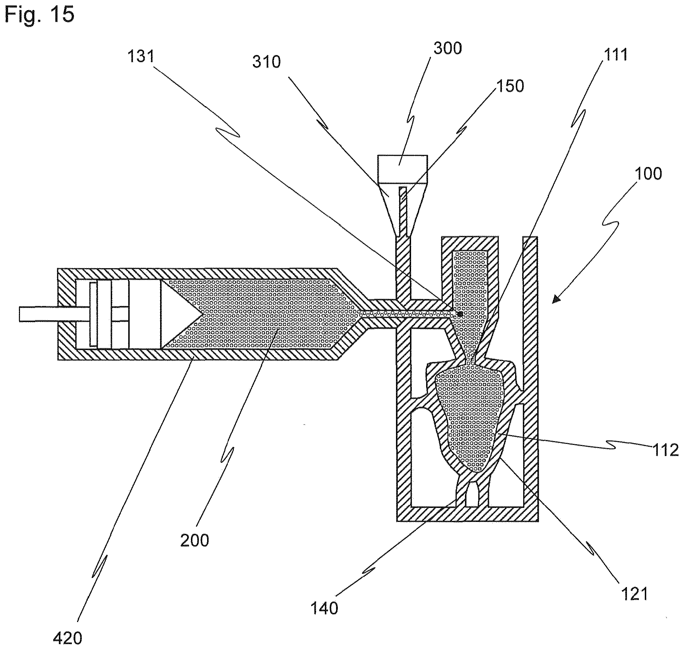

An die erste Öffnung 111 schließt fluidleitend ein Befüllungskanal 130 mit einem Ausgleichsvolumen 131 an. An den Befüllungskanal 130 können Befüllungsmittel 400, wie beispielsweise Injektionsspritzen 420, insbesondere Niederdruckinjektionsspritzen (s. Figur 15) oder Zuleitungen, wie Schläuche 410 (s. Figur 6) angeschlossen werden, um die Befüllung der Kavität 110 mit Anmischmasse 200 zu erleichtern. Das Ausgleichsvolumen 131 dient als eine Art Reservoir für die Anmischmasse 200, sodass der Volumenverlust von durch die zweiten Öffnungen 112 entweichenden Fluiden 205, 207, 208 mittels der im Ausgleichsvolumen 131 vorgehaltenen Anmischmasse 200 ausgeglichen werden kann. Die Kaltgussform 100 ist im dargestellten Ausführungsbeispiel einstückig mit dem Befüllungskanal 130 und dem Ausgleichsvolumen 131 hergestellt.

In der Figur 3 ist eine schematisch perspektivische Darstellung eines zweiten Ausführungsbeispiels einer erfindungsgemäßen Kaltgussform 100 dargestellt. Die Kaltgussform 100 entspricht dem in den Figuren 1 und 2 gezeigten ersten Ausführungsbeispiel mit der Ausnahme, dass der Befüllungskanal 130 ohne das (optionale) Ausgleichsvolumen 131 ausgebildet ist und eine kanalartige, zweite Öffnung 112 einstückig in die okklusale, außenliegende Wandung 121 mündet. Der Befüllungskanal 130 kann wahlweise einstückig oder auch als Zusatzteil der Kaltgussform (100) realisiert sein und mündet mit seiner ersten Öffnung 111 in die Kavität (110). In dieser Variante durchsetzt die erste Öffnung 111 die zweite Öffnung 112 konzentrisch. Bedarfsweise kann ein separates Ausgleichsvolumen 131, insbesondere als Bestandteil eines Befüllungsmittels 400 an den Befüllungskanal 130 angeschlossen werden.

Eine Schnittdarstellung eines dritten Ausführungsbeispiels einer erfindungsgemäßen Kaltgussform 100 mit insgesamt fünf Befüllungskanälen 130 kann der Figur 4 entnommen werden. Die Befüllungskanäle 130 münden jeweils über die okklusale, außenliegende Wandung 121 der Kaltgussform 100 durchsetzende erste Öffnungen 111 in die Kavität 100. Jeder der Befüllungskanäle 130 ist mit einem zugehörigen Ausgleichsvolumen 131 fluidleitend verbunden. Die Kaltgussform 100 kann wahlweise über einen oder mehrere der Befüllungskanäle 130 mit derselben oder verschiedener Anmischmasse 200 befüllt werden, wobei nicht zur Befüllung genutzte Befüllungskanäle 130 dann als jeweilige zweite Öffnungen 112 fungieren und zum Ausleiten von in der Anmischmasse 200 enthaltenen Fluiden 205, 207 und/oder Lufteinschlüssen 208 dienen. Insbesondere bei Nutzung aller Befüllungskanäle 130 ist eine schnelle und besonders gleichmäßige Befüllung der Kavität 110 der Kaltgussform 100 möglich.

Der Figur 5 kann eine schematisch perspektivische Darstellung eines vierten Ausführungsbeispiels einer erfindungsgemäßen Kaltgussform 100 entnommen werden. Die Kaltgussform 100 weist insgesamt fünf Befüllungskanäle 130 auf, die über erste Öffnungen 111 die okklusale, außenliegende Wandung 121 durchsetzend in die Kavität 110 münden. Einer der Befüllungskanäle 130 ist mit einem Förder- und/oder Mischmittel 132, hier in Form eines Schneckenförderers, versehen. Dieser Befüllungskanal 130 ist mit einer größeren Querschnittsfläche, insbesondere einem größeren Durchmesser ausgebildet als die vier übrigen Befüllungskanäle 130. Gemäß der dargestellten Abbildung ist das Förder- und/oder Mischmittel 132 als zusätzliches Bauteil in den vorzugsweise einstückig mit der Kaltgussform 100 ausgeführten Befüllungskanal 130 eingeschoben. Besonders vorteilhaft lässt sich das Förder- und/oder Mischmittel 132 unmittelbar während der Herstellung der Kaltgussform 100 direkt im Inneren des Befüllungskanals 130 additiv ausbilden.

In der Figur 6 ist die Kaltgussform gemäß der Figur 5 in einer Schnittdarstellung mit zusätzlichen, jeweiligen Ausgleichsvolumen 131, die an die jeweiligen Befüllungskanäle 130 fluidleitend anschließen, gezeigt. An den das Förder- und/oder Mischmittel 132 enthaltenden Befüllungskanal 130 ist ein Befüllungsmittel 400 über zwei Schläuche 420 angeschlossen. Über die Schläuche 420 wird Anmischmasse 200 der Kaltgussform 100 zugeführt. Das hier dargestellte Ausführungsbeispiel eignet sich besonders gut für Anmischmassen 200, die sich aus beispielsweise zwei Komponenten zusammensetzen. Über die beiden Schläuche 420 können die Komponenten dem Befüllungskanal 130 zunächst getrennt zugeleitet und dort mittels des Förder- und/oder Mischmittel 132 miteinander vermischt werden, bevor die gemischte Anmischmasse 200 durch die erste Öffnung 111 in die Kavität 110 eintritt.

Ein fünftes Ausführungsbeispiel einer erfindungsgemäßen Kaltgussform 100 kann der Figur 7 in schematische Seitenansicht entnommen werden. Entlang der die Kavität 110 begrenzenden, außenliegenden Wandungen 121 ist die Kaltgussform 100 einstückig mit zwei Wandverstärkungen bzw. -vorsprüngen 123, jeweils in der Art eines Flansches ausgebildet. Der zwischen den Wandverstärkungen 123 liegende Abschnitt der entsprechenden außenliegenden Wandung 121 ist gegenüber den Wandverstärkungen 123 mit einer geringeren Wandstärke hergestellt und dient daher als Sollbruchstelle 124. Durch Einführen eines Exzenter-Werkzeugs 125 zwischen die beiden Wandverstärkungen 123, kann die Kaltgussform 100 entlang der Sollbruchstelle 124 "aufgehebelt" werden, um die Kaltgussform 100 von der darin ausgehärteten Anmischmasse 200 zu lösen.

Die, auf die für zahnmedizinische Formteile 210 erforderliche Endhärte ausgehärtete Anmischmasse 200 ist der Figur 8 als fertiges Formteil 210, welches mit der als Prüfkörper ausgebildeten Kaltgussform 100 hergestellt wurde, zu entnehmen. Das Formteil 210 weist Wandstärken in einem Bereich von 0,3 mm bis 10 mm auf. Ein unterer, apikaler Abschnitt das Formteils 210 ist mit einer Ausnehmung 211 ausgebildet, deren Form der Form eines Abutments zum Aufsetzen eines zahnmedizinischen Formteils 210, beispielsweise einer Krone, entspricht. Durch die Vielzahl an zweiten Öffnungen 112, die die innenliegenden Wandungen 122 der Kaltgussform 100 in siebartiger Struktur durchsetzen (siehe Figur 2), sind die nach innen weisenden Wandungen der Ausnehmung 211 mit einer noppenartigen Oberfläche 212 versehen. Die noppenartige Oberfläche 212 verbessert den Halt zwischen dem zahnmedizinischen Formteil 210, beispielsweise einer Krone sowie z. B. dem Abutment.

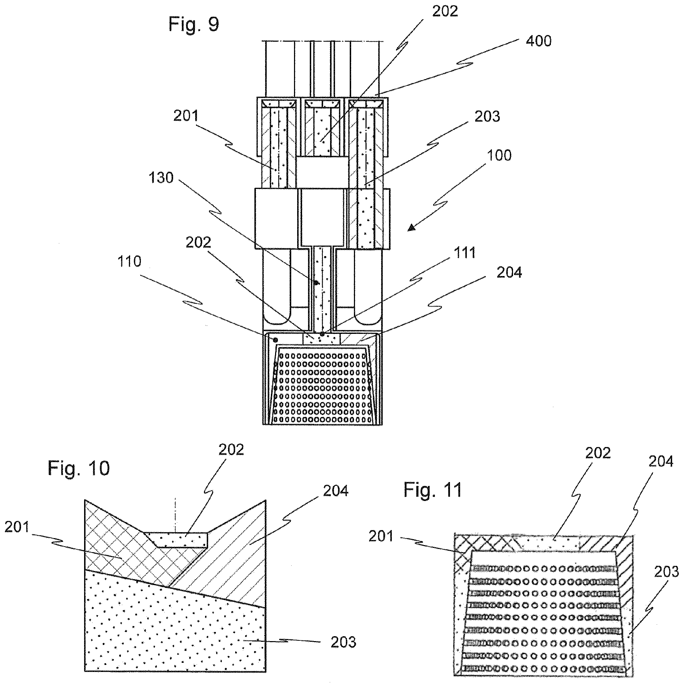

In der Figur 9 ist die Kaltgussform 100 aus der Figur 4 in einer Schnittansicht dargestellt. Die Kavität 110 der Kaltgussform 100 wird hier über ein Befüllungsmittel 400 mit unterschiedlichen Anmischmassen 201, 202, 203, 204 befüllt. Die Anmischmassen 201, 202, 203, 204 enthalten jeweils Zusatzstoffe, die zur Einfärbung und/oder zur Erzeugung von Opazität des fertigen Formteils 210 geeignet sind. Jede der Anmischmassen 201, 202, 203, 204 wird vorzugsweise über einen eigenen Befüllungskanal 130 und die jeweils daran anschließende erste Öffnung 111 in die Kavität 110 gefüllt.

Die Figuren 10 und 11 zeigen jeweils eine schematische Schnittdarstellung einer mit unterschiedlichen Anmischmassen 201, 202, 203, 204 befüllten Kavität 110. Beispielsweise kann der untere, apikale Abschnitt der Kavität 110 mit einer dritten Anmischmasse 203, zwei außenliegende, okklusale Abschnitte mit einer ersten Anmischmasse 201 bzw. einer vierten Anmischmasse 204 und ein dazwischenliegender okklusale Abschnitt mit einer zweiten Anmischmasse 202 befüllt werden. Nach dem Aushärten und/oder Verfestigen auf Endhärte weist das fertige, zahnmedizinische Formteil 210 dann Bereiche bzw. Abschnitte unterschiedlicher Farbgebungen oder Zahnfarben und/oder unterschiedlicher Opazitäten oder Transparenzen auf.

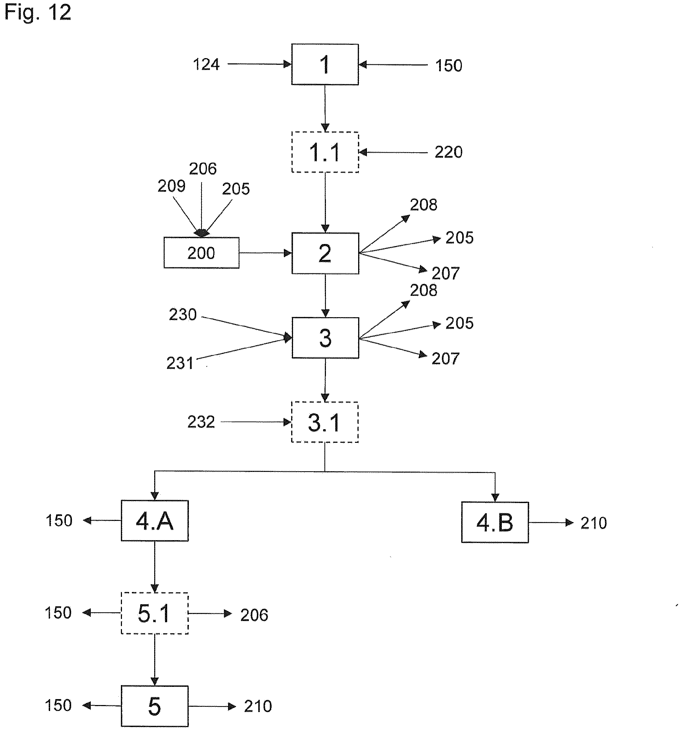

Die Figur 12 zeigt ein Flussdiagramm eines beispielhaften Ablaufs des Verfahrens zur Herstellung eines zahnmedizinischen Formteils 210. Hierbei wird zunächst eine Kaltgussform 100 bereitgestellt oder hergestellt (1). Die Kaltgussform 100 wird mittels eines additiven Materialaufbauverfahrens, zum Beispiel mit einem 3D Drucker aufgebaut, wobei die Kaltgussform 100 mindestens eine erste Öffnung 111 und mindestens eine zweite Öffnung 112 aufweist. Als Ausgangsmaterial 150 wird vorzugsweise ein thermisch und/oder ein thermochemisch zersetzbarer Kunststoff verwendet. Wahlweise kann die Kaltgussform 100 bereits während der Herstellung mit einer oder mehreren Sollbruchstellen 124 ausgebildet werden. Optional kann die Kaltgussform 100, bevor diese mit der Anmischmasse 200 befüllt wird, mit einem Beschichtungsmittel 220 beschichtet werden (1.1). Als Beschichtungsmittel 220 ist beispielsweise Petroleum geeignet, wobei die Kaltgussform 100 vorzugsweise in ein Becken mit Petroleum getaucht wird. Im Anschluss wird die Kaltgussform 100 mit der Anmischmasse 200 befüllt (2). Je nach gewünschtem Formteil 210 umfasst die Anmischmasse 200 ein keramisches, ein metallisches oder ein Kunststoffpulver 209, welches zur Herstellung von zahnmedizinischen Formteilen geeignet ist. Vorzugsweise wird das jeweilige Pulver 209 mit einem Verdünnungsmittel 205, zum Beispiel Wasser oder ein organisches Lösungsmittel, zu einem Schlicker oder einer pastösen Masse angerührt, mit einem Bindemittel 206 versetzt und vor der Verwendung konditioniert. Die Anmischmasse 200 wird über die mindestens eine, erste Öffnung 111 in die Kavität 110 der Kaltgussform 100 gefüllt. Bereits während der Befüllung können in der Anmischmasse 200 enthaltene Fluide 207, insbesondere das Verdünnungsmittel 205 oder Lufteinschlüsse 208 über die mindestens eine zweite Öffnung 112 entweichen. Nach der Befüllung härtet die Anmischmasse 200 im Inneren der Kaltgussform 100, genauer in deren Kavität 110 aus (3). Um die Aushärtung zu beschleunigen wird die Kaltgussform 100 beispielsweise in einen Trockenschrank oder Klimaschrank zur Einstellung einer gewünschten Luftfeuchtigkeit der Umgebung, gestellt und mit Wärme 230 beaufschlagt, sodass eine schnellere Trocknung bzw. Verdunstung der flüssigen Bestandteile der Anmischmasse 200 erfolgt. Hierbei können Fluide 207, Verdünnungsmittel 205 oder Lufteinschlüsse 208 weiterhin über die mindestens eine zweite Öffnung 112 und optional zusätzlich über die mindestens eine, erste Öffnung 111 entweichen. Für die Herstellung von zahnmedizinischen Formteilen 210 aus Kunststoff ist die Kaltgussform 100 transparent ausgebildet und wird mit Licht 231, insbesondere mit UV-Licht beaufschlagt. Bei zahnmedizinischem Kunststoff ist eine Aushärtung in der Kaltgussform 100 bis zur Endhärte möglich. Für die Herstellung von keramischen oder metallischen, zahnmedizinischen Formteilen 210 wird die Aushärtung in der Kaltgussform 100 vorzugsweise bis zur Grünlingshärte durchgeführt. Die Stabilität des Grünlings lässt sich durch die verwendeten Bindemittel 206 erzielen.

Nach der Aushärtung kann wahlweise eine Plastifizierung (3.1) der Kaltgussform 100 erfolgen. Hierzu wird die Kaltgussform 100 gemeinsam mit der darin befindlichen, ausgehärteten Anmischmasse 200 in einen Sinterofen gestellt und eine Temperatur in einem Bereich von 35°C bis 300°C, insbesondere von 50°C bis 300°C im Innern des Sinterofens eingestellt. Der Kunststoff der Kaltgussform 100 erweicht und kann beispielsweise durch Einblasen von Pressluft 232 "aufgeblasen" und von der Anmischmasse 200 abgelöst werden. Im Falle eines zahnmedizinischen Kunststoff-Formteils 210 wird die Kaltgussform 100 durch mechanische Krafteinwirkung entlang einer oder mehrerer, bei der Herstellung ausgebildeter Sollbruchstellen 124 geöffnet (4.B) und das fertige, zahnmedizinische Formteil 210 entnommen.

Für die Herstellung von keramischen oder metallischen, zahnmedizinischen Formteilen 210 wird die Kaltgussform 100 thermisch oder thermochemisch zersetzt (4.A), bevor oder während die Anmischmasse 200 auf Endhärte aushärtet. Hierzu wird die Kaltgussform 100 gemeinsam mit der darin befindlichen Anmischmasse 200 in einem Sinterofen platziert und eine thermische Zersetzung bzw. eine Pyrolyse unter Sauerstoffausschluss oder eine thermochemische Zersetzung bzw. eine Verbrennung mit Sauerstoff bei einer Temperatur in einem Temperaturbereich von 200°C bis 650°C eingeleitet, bei der das Ausgangsmaterial 150 vollständig oder nahezu vollständig aufgelöst wird. Bei einer Temperatur in einem Temperaturbereich von 650°C bis 1300°C kann die Anmischmasse 200 optional vorgesintert (5.1) werden, wobei sich das Bindemittel 206 verflüchtigt. Beim abschließenden End- oder Dichtsintern (5) wird die Anmischmasse 200 bei einer Temperatur in einem Temperaturbereich von 900°C bis 2500°C auf Endhärte verdichtet und kann als fertiges, zahnmedizinisches Formteil 210 aus dem Sinterofen entnommen werden. Auch etwaige noch nicht vollständig zersetzte Überreste der Kaltgussform 100 werden beim Vor- oder Endsintern zersetzt.

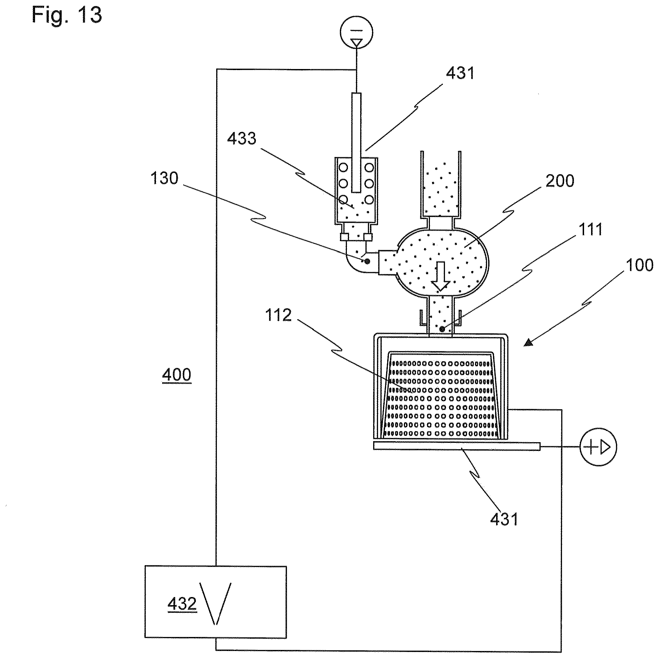

Die Figur 13 zeigt eine schematische Darstellung einer möglichen Befüllung der Kaltgussform 100 aus Figur 2 mittels Elektrophorese, insbesondere einer Elektrofiltration. Das Befüllungsmittel 400 ist hier in der Art einer elektrophoretischen Vorrichtung ausgebildet. Zur Elektrofiltration ist es erforderlich, dass die Anmischmasse 200 leitfähig ist, bspw. ein metallisches Pulver umfasst, wohingegen die Kaltgussform 100 wahlweise als Isolator, bspw. aus Kunststoff oder ebenfalls leitfähig, aus leitfähigen Polymeren hergestellt ist. Die mindestens eine erste Öffnung 111 der Kaltgussform 100 wird über die Anmischmasse 200 stromleitend mit einer Kathode 430 des Befüllungsmittels 400 verbunden. Die Vielzahl an zweiten Öffnungen 112 ist, ebenfalls über die leitfähige Anmischmasse 200 stromleitend mit einer Anode 431 des Befüllungsmittels 400 verbunden. Durch Anlegen einer Spannung über eine Spannungsquelle 432 kann ein elektrischer Strom erzeugt werden, der einen Partikeltransport von der Kathode 430 zur Anode 431 bewirkt. Bei Versuchen hat sich herausgestellt, dass bereits während der elektrophoretischen Befüllung der Kaltgussform 100 ca. 80 % des Verdünnungsmittels 205 aus der Anmischmasse 200 entweicht, was zu einer erheblich verkürzten Prozesszeit führt. Der restliche, in der Anmischmasse 200 verbliebene Feuchtigkeitsgehalt entweicht, wie zuvor ausführlich beschrieben über die Vielzahl an zweiten Öffnungen 112, insbesondere über durch diese ausgebildete, porösen und/oder hygroskopischen Flächen, bis zum Aushärten und/oder Verfestigen der Anmischmasse 200. Vorzugsweise ist die im Bereich der Kathode 430 angeordnete, erste Öffnung 111 bzw. ein sich daran anschließender Befüllungskanal 130 mit einem Röhrensiphon 433 versehen, der bei wässrigen Anmischmassen 200 ein Entweichen des sich dort bildenden Wasserstoffs ermöglicht, um die Homogenität der Anmischmasse 200 zu gewährleisten.

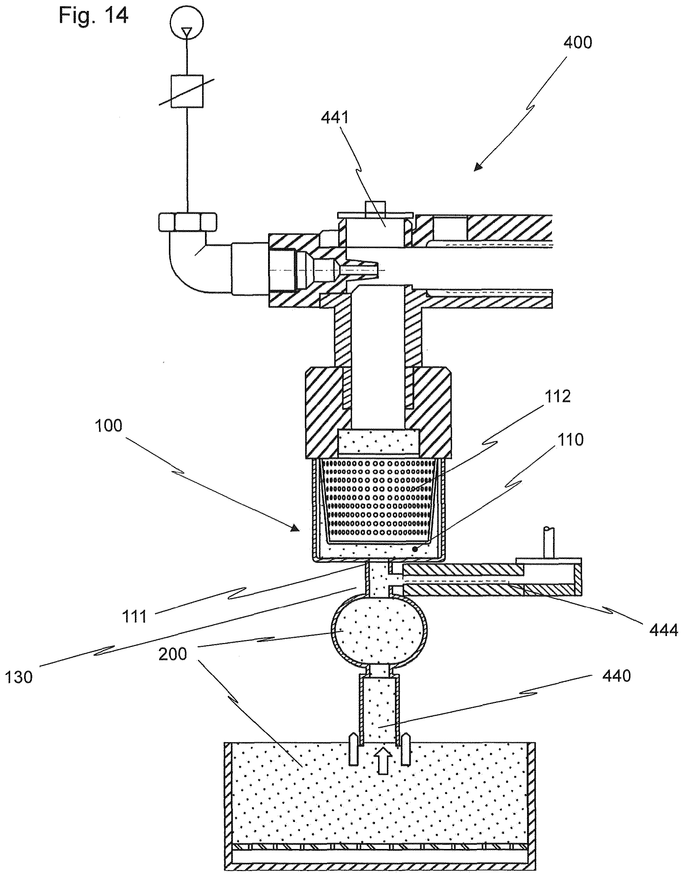

Die Figur 14 zeigt eine schematische Schnittdarstellung der Kaltgussform 100 aus den Figuren 1 und 2, die unter Druckeinwirkung mit Anmischmasse 200 pneumatisch befüllt wird. Dieses Verfahren eignet sich besonders gut für zur homogenen Befüllung pulverförmigen Anmischmassen 200, aber auch für Schlicker oder pastöse Massen. Zur Befüllung wird die Kaltgussform 100 bzw. deren Kavität 110 in der Art eines Staubsaugerbeutels genutzt, wobei der innerhalb der Kavität 110 vorliegende Druck geringer ist als der Umgebungsdruck. Dies kann entweder realisiert werden, indem die Anmischmasse 200 über eine unter Druck stehende Förderleitung 440 des hier als Druckvorrichtung ausgebildeten Befüllungsmittels 400 der Kavität 110 zugeführt wird. Die Einschleusung der Anmischmasse 200 in die Förderleitung 440 kann mithilfe von Zellenradschleusen, Druckbehältern und/oder Druckförderanlagen realisiert werden.

Alternativ oder zusätzlich kann in der Kavität 110 der Kaltgussform 100 außerdem ein Vakuum erzeugt werden, wodurch eine Vakuumförderung oder auch Saugförderung der Anmischmasse 200 realisiert wird. Mit einem Vakuumerzeuger 441 wird zentral oder dezentral ein Vakuum erzeugt, um Anmischmasse 200 über die mindestens eine, erste Öffnung 111 anzusaugen und in die Kavität 110 der Kaltgussform 100 zu transportieren. Die Anmischmasse 200 wird über die Vielzahl zweiter Öffnungen 112 bzw. die dazwischenliegenden Wandungsabschnitte im Inneren der Kavität 110 zurückgehalten. Die zur Förderung der Anmischmasse 200 genutzte Förderluft 442 passiert die Vielzahl zweiter Öffnungen 112 und wird über einen Partikelfilter 443 von der Umgebung zugeführt. Die Steuerung der Befüllung wird über einen Bypasskanal 444, der mit dem Befüllungskanal 130 fluidleitend verbunden ist, vereinfacht.

Die Figur 15 zeigt schließlich eine beispielhafte Ausführungsform der Erfindung, bei der die Kaltgussform 100 eine Kavität 110 aufweist, die der Geometrie eines zahnmedizinischen Formteils 210 entspricht. Schematisch angedeutet ist in der Abbildung außerdem eine Druckdüse 310 eines 3D-Druckers 300, mittels welcher die Kaltgussform 100 aus dem Ausgangsmaterial 150 einstückig additiv aufgebaut wird. Die Kaltgussform 100 umfasst eine erste Öffnung 111, die über ein ventilgesteuertes Ausgleichsvolumen 131 fluidleitend an einen Befüllungskanal 130 anschließt. Über den Befüllungskanal 130 wird mit einem Befüllungsmittel 400, hier beispielhaft einer Injektionsspritze 420 die Kavität 110 mit der Anmischmasse 200 befüllt. In der Anmischmasse 200 enthaltene Fluide 207 oder bei der Befüllung entstehende Lufteinschlüsse 208 werden über eine Vielzahl zweiter Öffnungen 112 aus der Kavität 110 ausgeleitet. Die zweiten Öffnungen 112 sind hier als Kapillaren oder Poren der außenliegenden Wandungen 121 ausgebildet und daher mit bloßem Auge nicht erkennbar. Durch die Vielzahl zweiter Öffnungen 112 entsteht eine poröse oder hygroskopische Fläche, die in der Anmischmasse 200 enthaltene Fluide 207 bzw. Feuchtigkeit aus der Kavität in die außenliegende Umgebung leitet.

### Bezugszeichenliste

- 100: Kaltgussform
- 110: Kavität oder Werkzugform
- 111: erste Öffnung
- 112: zweite Öffnung
- 120: Wandung
- 121: außenliegende Wandung
- 122: innenliegende Wandung
- 123: Wandverstärkung/Wandvorsprung
- 124: Sollbruchstelle
- 125: Exzenter-Werkzeug
- 130: Befüllungskanal
- 131: Ausgleichsvolumen
- 132: Förder- und/oder Mischmittel
- 140: Stützstruktur
- 150: Ausgangsmaterial
- 200: Anmischmasse
- 201,202, 203,204: Anmischmasse mit Zusatzstoffen
- 205: Verdünnungsmittel
- 206: Bindemittel
- 207: Fluide
- 208: Lufteinschlüsse
- 209: Pulver
- 210: Formteil
- 211: Ausnehmung
- 220: Beschichtungsmittel
- 230: Wärme/Luftfeuchtigkeit
- 231: Licht
- 232: Pressluft
- 300: 3D-Drucker
- 310: Druckdüse
- 400: Befüllungsmittel
- 410: Schlauch
- 420: Injektionsspritze, insbesondere Nidederdruckinjektionsspritze
- 430: Kathode
- 431: Anode
- 432: Spannungsquelle
- 433: Röhrensiphon
- 440: Förderleitung
- 441: Vakuumerzeuger
- 442: Förderluft
- 443: Partikelfilter
- 444: Bypasskanal

### Verfahrensschritte:

- 1: Bereitstellen und/oder Herstellen einer Kaltgussform
- 1.1: Beschichten der Kaltgussform
- 2: Befüllen der Kaltgussform mit Anmischmasse
- 3: Aushärten und/oder Verfestigen der Anmischmasse in der Kaltgussform
- 3.1: Plastifizieren der Kaltgussform
- 4.A: thermische oder thermochemische Zersetzung der Kaltgussform
- 4.B: mechanische Trennung von Kaltgussform und Anmischmasse
- 5.1: Vorsintern
- 5: Sintern

## Patentansprüche

1. Verfahren zur Herstellung einer Kaltgussform (100) für die Herstellung von Formteilen (210), insbesondere zahnmedizinischen Formteilen (210) aus einer Anmischmasse (200), wobei die Kaltgussform (100) mit einer dem Formteil (210), insbesondere dem zahnmedizinischen Formteil (210), geometrisch entsprechenden Kavität (110) anhand eines digitalen Datensatzes, insbesondere basierend auf einem räumlichen Modell des Mundraums eines Patienten, und mindestens einer in die Kavität (110) mündenden, ersten Öffnung (111) zur Befüllung mit der Anmischmasse (200) mittels eines additiven Materialaufbauverfahrens, insbesondere eines 3D-Druckverfahrens unter Verwendung eines 3D-Druckers (300), aus einem Ausgangsmaterial (150) einstückig additiv aufgebaut wird,
**dadurch gekennzeichnet, dass**
die Kaltgussform (100) mit mindestens einer, in die Kavität (110) mündenden und/oder aus der Kavität (110) führenden, zweiten Öffnung (112) zum Ausleiten von Gasen, insbesondere von Lufteinschlüssen (208), und/oder Flüssigkeiten, insbesondere Verdünnungsmitteln (205), additiv aufgebaut wird.

2. Verfahren nach Anspruch 1,
**dadurch gekennzeichnet, dass**
mindestens eine, die Kavität (110) begrenzende Wandung (120) der Kaltgussform (100) vollständig oder bereichsweise mit einer Vielzahl an in die Kavität (110) mündenden und diese Wandung (120) durchsetzenden, zweiten Öffnungen (112) zum Ausleiten von Gasen, insbesondere Lufteinschlüssen (208) und/oder Flüssigkeiten, insbesondere Verdünnungsmitteln (205) additiv aufgebaut wird.

3. Verfahren nach Anspruch 2,
**dadurch gekennzeichnet, dass**
die Vielzahl an zweiten Öffnungen (112) in der Art von Poren und/oder Kapillaren die Wandung (120) durchsetzend ausgebildet sind, sodass die Wandung (120) vollständig oder bereichsweise poröse und/oder hygroskopische Eigenschaften aufweist.

4. Verfahren nach einem der vorhergehenden Ansprüche,
**dadurch gekennzeichnet, dass**
die Kaltgussform (100) mit einem an die mindestens eine erste Öffnung (111) fluidleitend angrenzenden Befüllungskanal (130) additiv aufgebaut wird wobei der Befüllungskanal (130) mit mindestens einem Ausgleichsvolumen (131) zum Vorhalten von Anmischmasse (200) fluidleitend verbunden ist.

5. Verfahren nach einem der vorhergehenden Ansprüche,
**dadurch gekennzeichnet, dass**
zum additiven Aufbauen der Kaltgussform (100) ein organisches Material, insbesondere ein organisches Polymer oder ein Kunststoff als Ausgangsmaterial (150) verwendet wird, sodass die Kaltgussform (100) plastifizierbar und/oder thermisch und/oder thermochemisch zersetzbar ist.

6. Verfahren nach einem der vorhergehenden Ansprüche,
**dadurch gekennzeichnet, dass**
mindestens eine, die Kavität (110) der Kaltgussform (100) begrenzende Wandung (120) mit einer Sollbruchstelle (124), insbesondere mit einer bereichsweise geringeren Wandstärke, additiv aufgebaut wird.

7. Kaltgussform (100) für die Herstellung von Formteilen (210), insbesondere zahnmedizinischen Formteilen (210) aus einer Anmischmasse (200), welche Kaltgussform (100) mittels eines additiven Materialaufbauverfahrens, insbesondere gemäß einem der vorhergehenden Ansprüche, einstückig hergestellt ist, wobei die Kaltgussform (100) eine den Formteilen (210), insbesondere zahnmedizinischen Formteilen (120) geometrisch entsprechende und anhand eines digitalen Datensatzes, insbesondere basierend auf einem räumlichen Modell des Mundraums eines Patienten, erstellte Kavität (110) und mindestens eine, in die Kavität (110) mündende erste Öffnung (111) zur Befüllung mit der Anmischmasse (200) aufweist,
**dadurch gekennzeichnet, dass**
die Kaltgussform (100) mindestens eine, in die Kavität (110) mündende, zweite Öffnung (112) zum Ausleiten von Gasen, insbesondere von Lufteinschlüssen (208), und/oder Flüssigkeiten, insbesondere Verdünnungsmitteln (205) aufweist.

## Claims

1. A method for producing a cold casting mold (100) for producing molded parts (210), in particular dental molded parts (210), from a mixing compound (200), wherein the cold casting mold (100), having a cavity (110) that corresponds geometrically to the molded part (210), in particular the dental molded part (210), is additively constructed from a starting material (150) by means of an additive material construction method, in particular a 3D printing method using a 3D printer (300), on the basis of a digital data set in particular based on a three-dimensional model of the oral cavity of a patient and with at least one first opening (111) that opens into the cavity (110) for filling with the mixing compound (200),
**characterized in that**
the cold casting mold (100) is additively constructed having at least one second opening (112) opening into the cavity (110) and/or leading out of the cavity (110) for discharging gases, in particular air inclusions (208), and/or liquids, in particular diluents (205).

2. The method as claimed in claim 1,
**characterized in that**
at least one wall (120) of the cold casting mold (100) delimiting the cavity (110) is additively constructed completely or in regions having a plurality of second openings (112) opening into the cavity (110) and penetrating this wall (120) for discharging gases, in particular air inclusions (208) and/or liquids, in particular diluents (205).

3. The method as claimed in claim 2,
**characterized in that**
the plurality of second openings (112) are formed in the manner of pores and/or capillaries penetrating the wall (120), so that the wall (120) has porous and/or hygroscopic properties completely or in regions.

4. The method as claimed in any one of the preceding claims,
**characterized in that**
the cold casting mold (100) is additively constructed having a filling channel (130) adjoining the at least one first opening (111) in a fluid-conducting manner, wherein the filling channel (130) is connected in a fluid-conducting manner to at least one compensating volume (131) for storing mixing compound (200).

5. The method as claimed in any one of the preceding claims,
**characterized in that**
an organic material, in particular an organic wax and/or a polymer and/or a plastic, is used as the starting material (150) for additively constructing the cold casting mold (100), so that the cold casting mold (100) can be plasticized and/or thermally and/or thermochemically decomposed.

6. The method as claimed in any one of the preceding claims,
**characterized in that**
at least one wall (120) delimiting the cavity (110) of the cold casting mold (100) is additively constructed having a predetermined breaking point (124), in particular having a reduced wall thickness in regions.

7. A cold casting mold (100) for producing molded parts (210), in particular dental molded parts (210) from a mixing compound (200), which cold casting mold (100) is integrally produced by means of an additive material construction method, in particular as claimed in any one of the preceding claims, wherein the cold casting mold (100) has a cavity (110) that corresponds geometrically to the molded parts (210), in particular dental molded parts (120) and is created on the basis of a digital data set, in particular based on a three-dimensional model of the oral cavity of a patient, and at least one first opening (111) opening into the cavity (110) for filling with the mixing compound (200),
**characterized in that**
the cold casting mold (100) has at least one second opening (112) opening into the cavity (110) for discharging gases, in particular air inclusions (208), and/or liquids, in particular diluents (205).

## Revendications

1. Procédé de fabrication d'un moule de coulée à froid (100) pour la fabrication de pièces moulées (210), notamment de pièces moulées dentaires (210) à partir d'une masse de mélange (200), le moule de coulée à froid (100) étant construit de manière additive d'un seul tenant avec une cavité (110) correspondant géométriquement à la pièce moulée (210), notamment à la pièce moulée dentaire, à l'aide d'un ensemble de données numériques, notamment sur la base d'un modèle spatial de la cavité buccale d'un patient, et au moins une première ouverture (111) débouchant dans la cavité (110) pour le remplissage avec la masse de mélange (200) au moyen d'un procédé de construction de matériau additif, notamment d'un procédé d'impression 3D en utilisant une imprimante 3D (300), à partir d'un matériau de départ (150),
**caractérisé en ce que**
le moule de coulée à froid (100) est construit de manière additive avec au moins une deuxième ouverture (112) débouchant dans la cavité (110) et/ou menant hors de la cavité (110), pour évacuer des gaz, notamment des inclusions d'air (208), et/ou des liquides, notamment des diluants (205).

2. Procédé selon la revendication 1, **caractérisé en ce qu'**au moins une paroi (120) du moule de coulée à froid (100) délimitant la cavité (110) est construite de manière additive, entièrement ou par zones, avec une pluralité de deuxièmes ouvertures (112) débouchant dans la cavité (110) et traversant cette paroi (120), pour évacuer des gaz, notamment des inclusions d'air (208) et/ou des liquides, notamment des diluants (205).

3. Procédé selon la revendication 2, **caractérisé en ce que** la pluralité de deuxièmes ouvertures (112) sont réalisées à la manière de pores et/ou de capillaires traversant la paroi (120), de telle sorte que la paroi (120) présente entièrement ou par zones des propriétés poreuses et/ou hygroscopiques.

4. Procédé selon l'une quelconque des revendications précédentes, **caractérisé en ce que** le moule de coulée à froid (100) est construit de manière additive avec un canal de remplissage (130) adjacent fluidiquement à l'au moins une première ouverture (111), le canal de remplissage (130) étant relié fluidiquement à au moins un volume d'équilibrage (131) pour la réserve de masse de mélange (200).

5. Procédé selon l'une quelconque des revendications précédentes, **caractérisé en ce que**, pour la construction additive du moule de coulée à froid (100), on utilise en tant que matériau de départ (150) un matériau organique, notamment un polymère organique ou une matière plastique, de telle sorte que le moule de coulée à froid (100) est plastifiable et/ou décomposable thermiquement et/ou thermochimiquement.

6. Procédé selon l'une quelconque des revendications précédentes, **caractérisé en ce qu'**au moins une paroi (120) délimitant la cavité (110) du moule de coulée à froid (100) est construite de manière additive avec un point destiné à la rupture (124), notamment avec une épaisseur de paroi plus faible par zones.

7. Moule de coulée à froid (100) pour la fabrication de pièces moulées (210), notamment de pièces moulées dentaires (210) à partir d'une masse de mélange (200), lequel moule de coulée à froid (100) étant fabriqué d'un seul tenant au moyen d'un procédé de construction de matériau additif, notamment selon l'une quelconque des revendications précédentes, le moule de coulée à froid (100) présentant une cavité (110) correspondant géométriquement aux pièces moulées (210), notamment aux pièces moulées dentaires (120), et créée à l'aide d'un ensemble de données numériques, notamment sur la base d'un modèle spatial de la cavité buccale d'un patient, et au moins une première ouverture (111) débouchant dans la cavité (110) pour le remplissage avec la masse de mélange (200),
**caractérisé en ce que**
le moule de coulée à froid (100) présente au moins une deuxième ouverture (112) débouchant dans la cavité (110) pour évacuer des gaz, notamment des inclusions d'air (208), et/ou des liquides, notamment des diluants (205) .
